# EUROPEAN PATENT APPLICATION

(11) **EP 3 151 104 A1**
(43) Date of publication of application: **05.04.2017**
(21) Application number: 16187664.4
(22) Date of filing: 07.09.2016
(51) Int. Cl.: G06F 3/0488

(54) **MOBILE TERMINAL AND METHOD OF CONTROLLING THE SAME**

(30) Priority: 23.09.2015 KR 20150134878
(71) Applicant: LG ELECTRONICS INC., Yeongdeungpo-gu Seoul 07336 (KR)
(72) Inventor: Cho, Seonhwi, 06772 Seoul (KR); Kim, Donghoe, 06772 Seoul (KR); Ju, Wanho, 06772 Seoul (KR); Na, Sungchae, 06772 Seoul (KR)
(74) Representative: Ter Meer Steinmeister & Partner

(57) **Abstract**

A mobile terminal (100) according to the present disclosure may include a body; a wireless communication unit (110) configured to perform communication with an external communication device; and a touch screen (151) formed to display a home screen (230) and sense a touch; and a controller (180) configured to control the touch screen (151) to display a control screen (250) for performing control on at least part of external devices at a place at which the body is located based on the external communication device connected through the wireless communication unit (110) when a predetermined type of touch is applied to the touch screen (151) while displaying the home screen (230).

## Description

### BACKGROUND

### 1. Field

The present disclosure relates to a mobile terminal for performing communication with an external communication device and a control method thereof.

### 2. Background

Terminals may be divided into mobile/portable terminals and stationary terminals according to their mobility. Also, the mobile terminals may be classified into handheld terminals and vehicle mount terminals according to whether or not a user can directly carry.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

As an example for improvement in the field of software, technical development associated with applying the Internet of things to a terminal has been carried out.

### 3. Summary of the invention

A mobile terminal according to the invention may comprise:
a body;
a wireless communication unit configured to perform communication with an external communication device that is coupled to a plurality of external devices located at a predetermined space;
a touch screen configured to display a home screen and to sense a touch; and
a controller configured to control the touch screen to display a control screen to control one or more of the external devices at the predetermined place,
wherein the control screen is displayed when a predetermined type of touch is applied to the touch screen while displaying the home screen and the body of the mobile terminal is determined to be at the predetermined space based on the external communication device connected through the wireless communication unit.

The predetermined type of touch may be a multi-touch applied to at least two or more contact points on the touch screen.

The multi-touch may be a pinch-out touch for increasing a relative distance between two contact points on the touch screen.

The multi-touch may maintain a predetermined number of two or more contact points on the touch screen for more than a predetermined period of time.

A first control screen may control at least one external device disposed at a first place is displayed on the touch screen when the body is located at the first place, and a second control screen may control at least one external device disposed at a second place is displayed on the touch screen when the body is located at the second place different from the first place.

When the wireless communication unit is connected to the external communication device in a wireless manner, the controller may control the touch screen to display notification information indicating the wireless connection

The control screen may comprise a map image for at least a partial region of the predetermined place

The map image may comprise a first map image for a first region of the predetermined place and a second map image for a second region of the predetermined place, and
the first region and the second region are different regions or regions in which one region includes another region.

When a predetermined type of touch is applied to the touch screen in a state in which the first map image or the second map image is displayed, the controller may control the touch screen to display another image.

A sensing unit that senses an angle of the body with respect to the ground may be provided in the body, and
the controller may control the touch screen to display a first type of map image when the angle sensed by the sensing unit is above a predetermined angle, and may control the touch screen to display a second type of map image when the angle sensed by the sensing unit is below a predetermined angle

The map image may be a three-dimensional map image for a partial region of the predetermined place,
and the three-dimensional map image may be a three-dimensional map image pre-stored in the body or an image received in real time from a camera provided in the body.

The three-dimensional map image may be displayed on the touch screen to correspond to at least one of a current location of the body sensed within the predetermined place or a direction relative to the body.

The control screen may comprise at least one of an image object corresponding to an external device disposed at the predetermined place and overlapping with the map image or status information of a corresponding external device.

The status information may be displayed at a position overlapping with or adjacent to the image object of the corresponding external device.

When a predetermined type of touch is applied to the control screen in a state in which the control screen is displayed on the touch screen, the controller may control the touch screen to display the home screen, and the home screen may comprise an icon linked to the control screen.

### BRIEF DESCRIPTION OF THE DRAWINGS

The embodiments will be described in detail with reference to the following drawings in which like reference numerals refer to like elements wherein:
FIG. 1A is a block diagram for explaining a mobile terminal associated with the present disclosure, and FIGS. 1B and 1C are conceptual views in which a mobile terminal associated with the present disclosure is seen from different directions;
FIG. 2A is a flow chart for explaining a control method associated with a predetermined place according to the present disclosure, and FIGS. 2B and 2C are conceptual views for explaining the control method of FIG. 2A;
FIGS. 3A and 3B are conceptual views for explaining a three-dimensional map image included in a control screen associated with the present disclosure;
FIGS. 4A through 4B are conceptual views for explaining a control method for mutual conversion between various maps included in a control screen associated with the present disclosure;
FIGS. 5A and 5B are conceptual views for explaining a control method for the display of the status information or notification information of an external device using an image object associated with the present disclosure. Furthermore, FIGS. 5C and 5D are conceptual views for explaining a control method of an external device using an image object;
FIGS. 6A through 6E are conceptual views for explaining a control method of an external device based on a user's input entered through a window associated with the present disclosure;
FIGS. 7A and 7B are conceptual views for explaining a window for controlling a plurality of external devices associated with the present disclosure;
FIGS. 8A and 8B are conceptual views for explaining a control method associated with the end of a control screen of a predetermined place associated with the present disclosure;
FIGS. 9A through 9E are conceptual views for explaining various embodiments of displaying information on an event occurred on an external device associated with the present disclosure; and
FIGS. 10A through 10D are conceptual views for explaining a method of displaying the notification information of an external device when a notification mode according to an embodiment of the present disclosure is set to a sensitive mode.

### DETAILED DESCRIPTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as digital TV, desktop computers and the like, excluding a case of being applicable only to the mobile terminals.

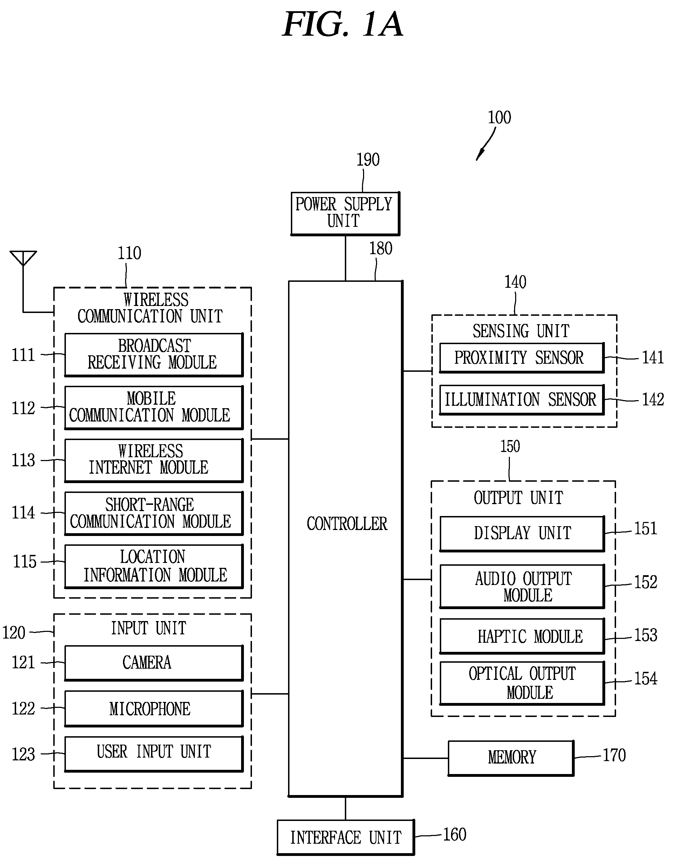

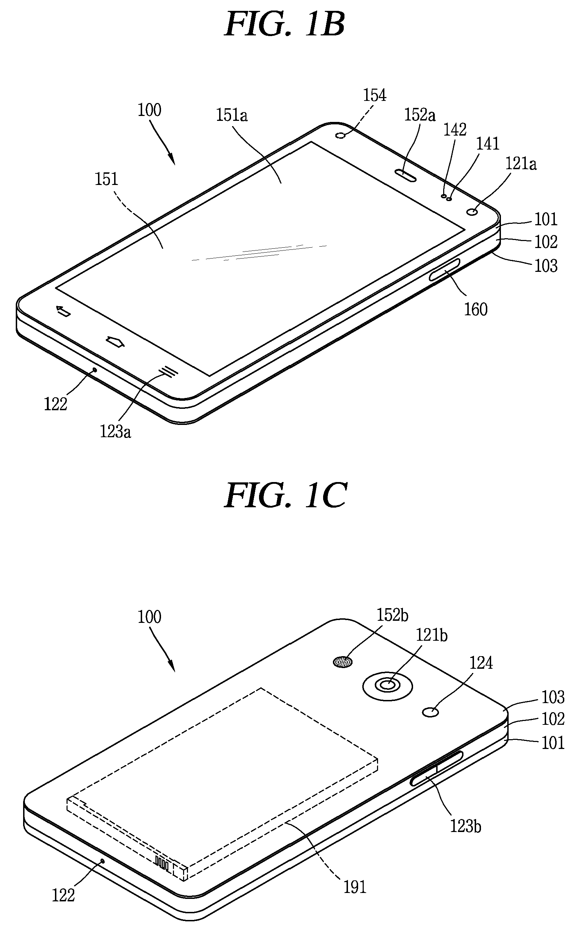

Referring to FIGS. 1A through 1C, FIG. 1A is a block diagram of a mobile terminal for explaining a mobile terminal associated with the present disclosure, and FIGS. 1B and 1C are conceptual views in which an example of the mobile terminal is seen from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone (refer to reference numeral 122), a battery gauge, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

The controller 180 may control at least part of the components illustrated in FIG. 1, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration.

First, considering the wireless communication unit 110, the broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), etc.)

Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of another module of the wireless communication unit 110 to obtain data for the position of the mobile terminal in a substitutional or additional manner. The location information module 115 may be a module used to acquire the position (or current position) of the mobile terminal, and may not be necessarily limited to a module for directly calculating or acquiring the position of the mobile terminal.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 170 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects that the user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner.

Here, the terminal body may be understood as a conception which indicates the mobile terminal 100 as at least one assembly.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151 a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121 b or an audio output module 152b.

The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The mobile terminal 100 may include a display unit 151, first and second audio output modules 152a and 152b, a proximity sensor 141, an illumination sensor 152, an optical output module 154, first and second cameras 121 a and 121 b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121 a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121 b are disposed on a rear surface of the terminal body, with reference to FIG. 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151 a and a display (not shown) on a rear surface of the window 151 a or patterned directly on the rear surface of the window 151 a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1 A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151 a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151 a and the front case 101). In this case, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121 a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b may be further mounted to the rear surface of the terminal body. The second camera 121b may have an image capturing direction, which is substantially opposite to the direction of the first camera unit 121 a.

The second camera 121b may include a plurality of lenses arranged along at least one line. The plurality of lenses may also be arranged in a matrix configuration. The cameras may be referred to as an 'array camera.' When the second camera 121 b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

On the other hand, a mobile terminal according to the present disclosure provides a function capable of performing control on a place based on the place at which a body of the mobile terminal (hereinafter, referred to as a "body") is located.

To this end, an external communication device may be pre-installed at a predetermined place. The external communication device may be a device capable of performing communication with the body. In other words, the external communication device may perform communication with the wireless communication unit 110 of the body.

Specifically, the external communication device may be implemented with one or more beacons. A beacon as a Bluetooth 4.0 based short-range wireless communication device may communicate with devices within the maximum distance of 70 m.

For example, when the beacon is installed at the predetermined place, whether or not the body is located at the predetermined place may be determined based on the signal intensity of a beacon received at the wireless communication unit 110.

Specifically, if the size (or radius) of a predetermined place is about A(m), and the received intensity of the beacon is B(dB) when the body is located at about A(m) from the beacon, then the controller 180 may determine that the body is located within the predetermined place when the intensity of the beacon received from the body is above B(dB).

On the other hand, according to the present disclosure, the external communication device may include a beacon, a Wi-Fi module, or the like. In this case, a mobile terminal may acquire the location of the mobile terminal based on the information of a wireless access point (AP) transmitting or receiving a wireless signal to or from the Wi-Fi module.

According to the present disclosure, the predetermined place may be preset by a user. In other words, the external communication device may be previously installed by the user at the predetermined place.

Furthermore, there may exist a plurality of the predetermined places. In this case, the predetermined places may be referred to as a first place, a second place, a third place, ..., a n-th place. For example, when the predetermined places are a user's home, office, and car, the places may be sequentially referred to as a first place, a second place and a third place.

A mobile terminal according to the present disclosure may perform control associated with the place based on a place at which the body is located. In other words, the mobile terminal may perform control associated with a first place when the body is located at the first place, and perform control associated with a second place when the body is located at the second place.

Moreover, each place may be divided into a plurality of regions. For example, the first place may be divided into a 1-1 region, a 1-2 region, a 1-3 region, ..., a (1-n)th region. The each region may correspond to bedroom 1, bedroom 2, living room, ..., bathroom, and the like.

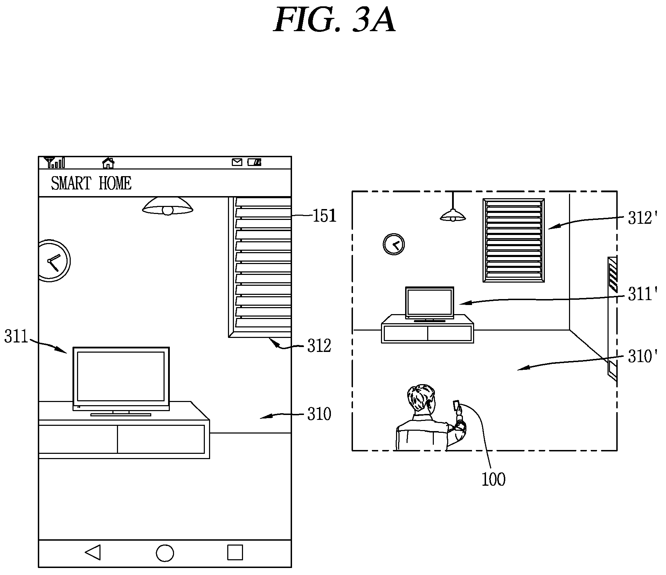

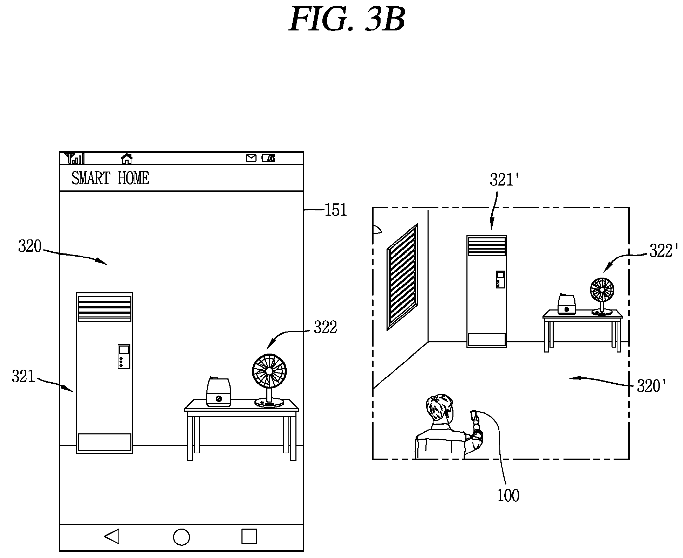

In this case, a mobile terminal according to the present disclosure may perform control associated with a region based on the region at which the body is located among a plurality of places. It will be described in more detail later with reference to FIG. 3.

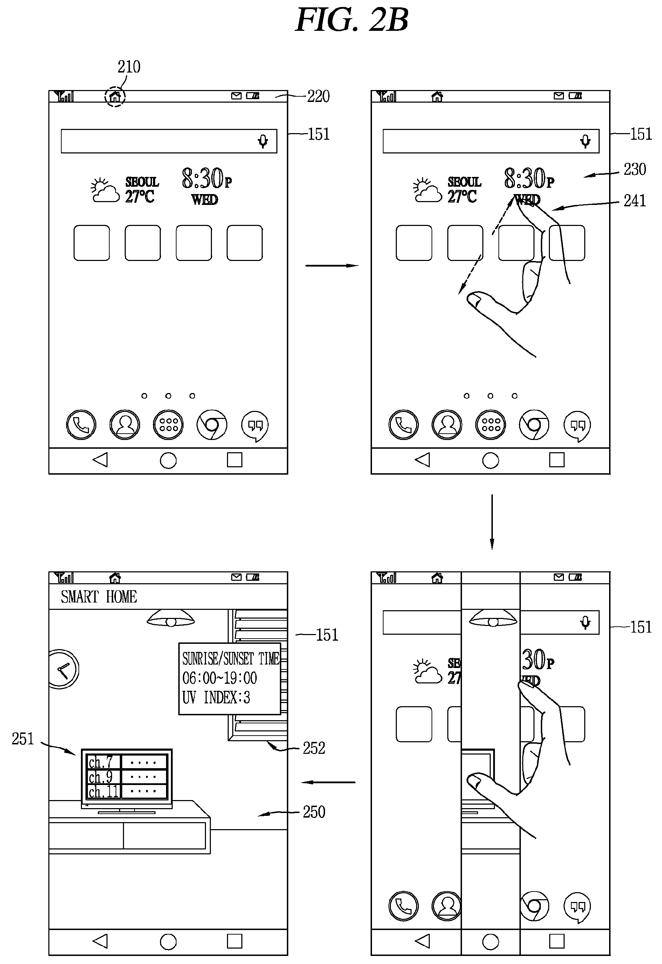

Furthermore, hereinafter, in describing the present disclosure with reference to the accompanying drawings, when at least two images are illustrated in the form of 2 by 2 on a drawing (See, for example, FIG. 2B), an image illustrated in the upper left corner, an image illustrated in the upper right corner, an image illustrated in the lower right corner, and an image illustrated in the lower left corner will be referred to as a first drawing, a second drawing, a third drawing, and a fourth drawing, respectively.

Furthermore, when at least two images are illustrated in a column from the top to bottom direction on a drawing, the images will be sequentially referred to as a first drawing, a second drawing, ... from the uppermost image.

Furthermore, when at least two images are illustrated in a row from the left to the right direction on a drawing, the images will be sequentially referred to as a first drawing, a second drawing, ... from the leftmost image.

On the other hand, when a user's request for performing control associated with the predetermined place, a mobile terminal according to the present disclosure may display a control screen for the control of the place. It will be described below in detail with reference to the drawings.

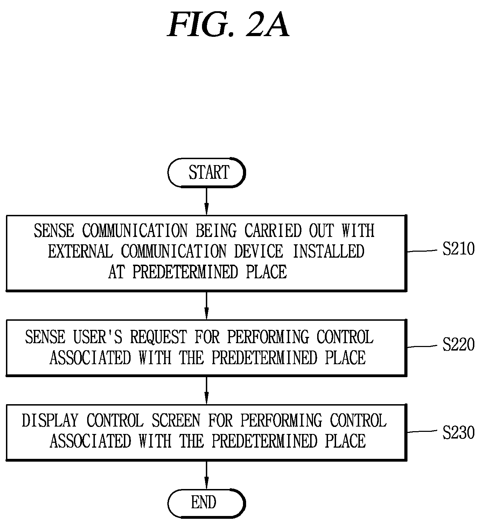

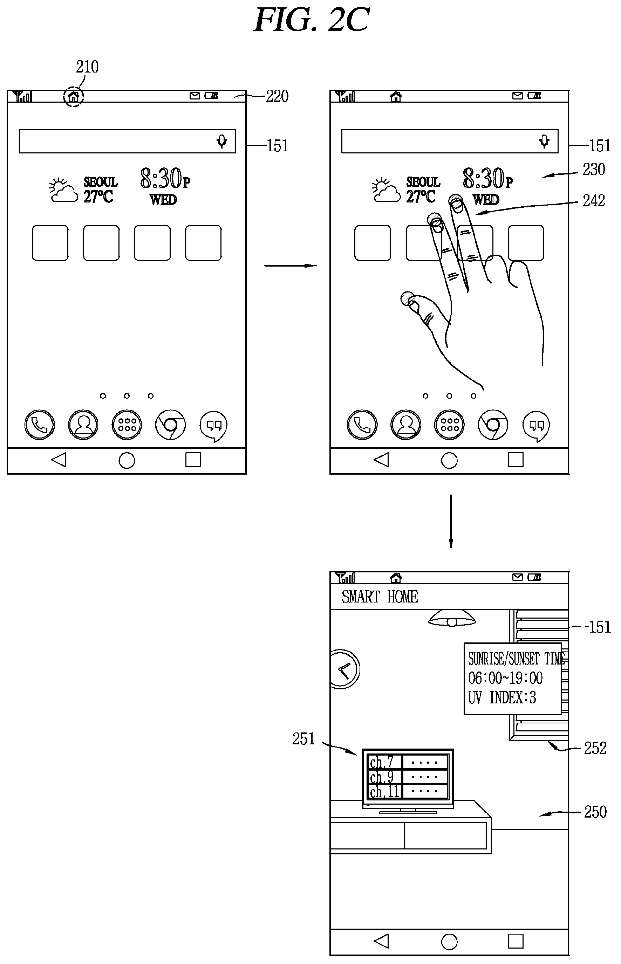

FIG. 2A is a flow chart for explaining a control method associated with a predetermined place according to the present disclosure, and FIGS. 2B and 2C are conceptual views for explaining the control method of FIG. 2A.

Referring to FIG. 2A, the controller 180 senses that the body performs communication with an external communication device installed at a predetermined place (S210).

Specifically, when the body is located at a predetermined place, the wireless communication unit 110 of the body performs communication with an external communication device installed at the predetermined place. Here, the external communication device may include at least one of one or more beacons and Wi-Fi modules as described above.

When the wireless communication unit 110 is connected to the external communication device in a wireless manner, the controller 180 may determine that the body is located at the predetermined place. Alternatively, when a signal of the external communication device received from the wireless communication unit 110 is above a predetermined intensity, the controller 180 may determine that the body is located at the predetermined place.

On the other hand, when determined that the body is located at a predetermined place, the controller 180 may control the display unit 151 to display notification information indicating that control on the place is allowed for a user.

Here, the notification information may be displayed in various ways. The notification information may be displayed using at least one of auditory, tactile and visual modes. The output mode of the notification information may be preset by the user.

For an example of displaying the notification information in a visual mode, referring to the first drawing of FIG. 2B, the notification information may be displayed in the form of a notification icon 210.

Specifically, when the controller 180 determines that the body is located at a predetermined place in a state that a predetermined screen is displayed on the touch screen 151, the notification icon may be displayed at one side of the status display bar 220.

On the other hand, it is illustrated on the drawing that the predetermined screen is a home screen 230, but the predetermined screen may be also at least one of a lock screen and an execution screen of an application preset by the user in addition to the home screen.

Though not shown in the drawing, for another example of displaying the notification information in a visual mode, the notification information may be displayed in the form of a notification window.

Specifically, when the controller 180 determines that the body is located at a predetermined place in a state that a predetermined screen is displayed on the touch screen 151, the notification window may be displayed at an arbitrary location of the touch screen 151.

Furthermore, when the controller 180 determines that the body is located at a predetermined place in a state that the touch screen 151 is in an inactive state, the touch screen 151 may be activated to display the notification icon 210 or notification window as described above if a predetermined screen is displayed.

The user may recognize that control on the predetermined place is currently allowed through the display of the notification icon 210 or notification window.

On the other hand, the controller 180 may receive a user's request for performing control associated with the predetermined place (S220). Subsequently, the controller 180 controls the touch screen 151 to display a control screen 250 for performing control associated with the predetermined place based on the user's request being received (S230).

Here, the user's request may be entered in various ways.

For an example, though not shown in the drawing, the user's request may be received when a hardware key provided in the mobile terminal body is pressed by the user. On the other hand, when the hardware key is a touch key, the user's request may be received when a touch is applied to the touch key.

For another example, referring to FIG. 2B, the user's request may be a predetermined type of touch 241 applied to the touch screen 151.

The predetermined type of touch 241 is linked to a function of displaying the control screen 250 for performing control associated with the predetermined place. In other words, when the predetermined type of touch 241 is applied to the touch screen 151 in a state that a predetermined screen 230 is displayed thereon, the control screen 250 for performing control associated with the predetermined place is displayed. In other words, screen conversion from the predetermined screen 230 to the control screen 250 is carried out on the touch screen 151.

Here, it is illustrated on the first drawing of FIG. 2B that the predetermined screen is a home screen, but the present disclosure may not be necessarily limited to this. In other words, the predetermined screen may be any one of a home screen, a lock screen and an execution screen of a predetermined application.

Furthermore, FIG. 2B illustrates the predetermined type of touch 241 applied to the predetermined screen in a state that the foregoing notification information (notification information indicating that control on a predetermined place is enabled) 210 is displayed thereon, but the present disclosure may not be necessarily limited to this. In other words, if the body and the external communication device are connected to each other in a wireless manner, the control screen may be displayed based on the predetermined type of touch 241 applied thereto, regardless of whether or not the notification icon 210 is displayed thereon.

On the other hand, a predetermined type of touch linked to a function of displaying the control screen may be carried out in various modes.

Referring to FIGS. 2B and 2C, the predetermined type of touch may be any one of a pinch-out touch 241, a multi-touch 242, and the like. On the other hand, the present disclosure may not be necessarily limited to the foregoing touch modes.

For example, The preset type of touch may include various types of touches. For example, the various types of touches may include a short (or tap) touch, a long touch, a double touch, a multi touch, a drag touch, a flick touch, a pinch-in touch, a pinch-out touch, a swipe touch, a hovering touch and the like.

Hereinafter, the various types of touches will be described in more detail.

A short (or tap) touch may be a touch in which a touch subject (for example, a finger, a stylus pen, etc.) is in contact with the touch screen 151 (or a touch is applied) and then released within a predetermined period of time. For example, the short (or tap) touch may be a touch in which a touch subject is in contact with the touch screen for a short period of time like a single click of mouse.

A long touch may be a touch in which a touch subject is in contact with the touch screen 151 and then maintained for more than a predetermined period of time. For example, the long touch may be a touch in which a touch is applied to the touch screen 151 by a touch subject and then the touch is maintained for more than a predetermined period of time. More specifically, the long touch may be a touch in which the touch is maintained at one position on the touch screen for a predetermined period of time and then released therefrom. Furthermore, the long touch may be understood as a touch corresponding to a touch-and-hold operation in which the contact state of a touch subject is maintained on the touch screen 151 for more than a predetermined period of time.

A double touch may be a touch in which the short touch is consecutively applied to the touch screen 151 at least twice within a predetermined period of time.

A predetermined period of time described in the short touch, long touch and double touch may be determined by user's setting.

A multi touch may be a touch being applied to at least two contact positions on the touch screen 151 at substantially the same time point. Moreover, the multi-touch may be a touch applied a predetermined number of two or more contact points on the touch screen for more than a predetermined period of time.

A drag touch may be a touch in which a contact started from a first position of the touch screen 151 is consecutively applied on the touch screen along one direction and then the contact is released from a second position different from the first position.

Specifically, the drag touch may be a touch applied to one position of the touch screen 151 by a touch subject being consecutively extended while being maintained on the touch screen 151 and then released from a position different from said one position.

Furthermore, the drag touch may denote a touch in which the touch is applied to one position of the touch screen 151 and then consecutively extended from the touch.

A flick touch may be a touch in which the drag touch is applied within a predetermined period of time. Specifically, the flick touch may be a touch in which a touch subject applying the drag touch is released from the touch screen 151 within a predetermined period of time. In other words, the flick touch may be understood as a drag touch applied at a speed above a predetermined speed.

A swipe touch may be a drag touch applied in a straight line.

A pinch-in touch may be a touch in which at least one of a first and a second touch applied to different two positions (separate two positions) on the touch screen 151 is extended in a direction closer to each other. For example, the pinch-in touch may be a touch implemented by an operation of decreasing a distance between two fingers in a state that the fingers are in contact with separate two positions, respectively, on the touch screen 151.

A pinch-out touch may be a touch in which at least one of a first and a second touch applied to different two positions (separate two positions) on the touch screen 151 is extended in a direction away from each other. For example, the pinch-out touch may be a touch implemented by an operation of increasing (extending) a distance between two fingers in a state that the fingers are in contact with separate two positions, respectively, on the touch screen 151.

A hovering touch may be a touch corresponding to the operation of a touch subject in a space away from the touch screen 151 while the touch subject is not in contact with the touch screen 151, and for an example, may be a proximity touch as illustrated in FIG. 1A. For example, the hovering touch may be a touch corresponding to an operation in which the touch subject is maintained at one position separated from the touch screen 151 for more than a predetermined period of time.

According to the present disclosure, it will be described that the preset type of touch is a drag touch, for example. However, the foregoing various types of touches will be analogically applied to the preset type of touch in the same or similar manner.

According to the present disclosure, the control screen 250 may be a screen for controlling external devices disposed at the predetermined place.

More specifically, the control screen 250 may include a map image for at least partial region of the predetermined place to intuitively provide the arrangement relationship or the like between the external devices within the predetermined place to the user.

Referring to the fourth drawing of FIG. 2B, the control screen 250 may overlap with the map image, and may include image objects 251, 252 corresponding to the external devices. The status information or notification information on external devices corresponding to the image objects 251, 252 may be displayed to overlap with the image objects 251, 252.

Furthermore, when a touch is applied to the image objects 251, 252, control on external devices corresponding to the image objects may be carried out. It will be described later in detail.

Furthermore, the map image may be an image for various regions (a first region, a second region, ..., an n-th region) of the predetermined place. In other words, the predetermined place may be the same, but map images for each region may be different.

For example, when a map image of the predetermined place includes a map image for a first and a second region, the first and the second region may be different regions. Here, the first and the second region may be non-overlapping regions with each other at the predetermined place. Alternatively, the first and the second region may be regions in which any one region contains another region.

More specifically, when a predetermined type of first touch is applied in a state that a map image for the first region is displayed on the touch screen 151, a map image for the second region may be displayed. Furthermore, when a predetermined type of second touch is applied in a state that a map image for the second region is displayed thereon, a map image for the first region may be displayed. In other words, map images for the first and the second region may be converted to each other, and displayed on the touch screen 151. It will be described later in detail.

On the other hand, the map image may include various types of map images. For example, the map image may be any one of a three-dimensional map image, a plan image and a stereoscopic view image corresponding to a partial region of the predetermined place.

Similarly to the foregoing description, when a predetermined type of first touch is applied in a state that any one type (referred to as a first type) of map image is displayed on the touch screen 151, another type (referred to as a second type) of map image may be displayed. Furthermore, when a predetermined type of second touch is applied in a state that a second type of map image is displayed thereon, a first type of map image may be displayed again. It will be described later in detail with reference to the accompanying drawings.

Hereinafter, a three-dimensional map image among the foregoing types of map images will be first described, and then a plan view image will be described. In addition, a control method for mutual conversion between the three-dimensional map images and plan view images will be described.

FIGS. 3A and 3B are conceptual views for explaining a three-dimensional map image included in a control screen associated with the present disclosure.

Referring to the first drawing of FIG. 3A, the control screen may include a three-dimensional map image 310 for at least partial region of the predetermined place.

The three-dimensional map image may be at least one of a three-dimensional map image pre-stored in the memory or an image received in real time from a camera provided in the body.

According to the present specification, the three-dimensional map image will be described based on a three-dimensional map image pre-stored by the user. Furthermore, according to the present specification, the three-dimensional map image will be described on the assumption that the predetermined place is a three-dimensional map image for a first place ("user's home").

On the other hand, according to the present disclosure, the three-dimensional map image may be displayed to correspond to a current location and a direction of the body sensed within the predetermined place.

Specifically, as described above, a first place may be partitioned into a plurality of regions. For example, the first place may be partitioned into a 1-1 region, a 1-2 region, a 1-3 region, ..., a (1-n)th region. In this case, the three-dimensional map image may include a plurality of external device map images corresponding to the plurality of regions.

In other words, a three-dimensional map image corresponding to a region in which the current location of the body is sensed among the three-dimensional map images may be displayed on the touch screen. Accordingly, a three-dimensional map image corresponding to a region at which the user is currently located may be displayed on the control screen.

Moreover, the controller 180 may display the three-dimensional map image to correspond to a direction directed from the sensed body or an inclined direction of the sensed body.

Here, the direction directed from the body may be sensed through a camera provided in the body. For example, in this case, part of the three-dimensional map image matching an image received from the camera may be extracted. Furthermore, the inclined direction of the body may be sensed by at least one of a geomagnetic sensor, a gyro sensor and an acceleration sensor.

Referring to FIGS. 3A and 3B, when a direction directed from the body is changed, three-dimensional map images 310, 320 displayed on the touch screen may be changed to correspond to the changed direction.

In summary, the external device map image displays part corresponding to the current location and direction of the body 100 on the touch screen.

For example, referring to FIG. 3A, a three-dimensional map image 310 for a space 310' corresponding to a direction directed from the mobile terminal 100 is displayed on the touch screen 151. Accordingly, the three-dimensional map image 310 may include image objects 311, 312 corresponding to external devices 311', 312' included in the space 310' corresponding to a direction directed from the body 100.

Referring to FIG. 3B, when a direction directed from the body is changed, a three-dimensional map image 320 for a space 320' corresponding to the changed direction of the body 100 is displayed on the touch screen 151. In other words, the three-dimensional map image 320 may include image objects 321, 322 corresponding to external devices 321', 322' included in the space 320' corresponding to a direction currently directed from the body 100.

Accordingly, part of a three-dimensional map image corresponding to a space directly seen by the user may be displayed on the touch screen 151. In other words, the user may intuitively view a three-dimensional map image displayed on the touch screen 151 in a manner corresponding to its real space.

Alternatively, though not shown in the drawing, contrary to the disclosed example, even if a direction directed from the body is changed, a three-dimensional map image displayed on the touch screen may maintain an initially displayed image as it is. In this case, when a predetermined touch (for example, a flick touch corresponding to a horizontal direction) is applied to the three-dimensional map image, a three-dimensional map image moved in a direction corresponding to a direction of the touch being applied thereto may be displayed.

On the other hand, a case where the predetermined place is a first place ("user's home") is illustrated on the drawing as an example, but there may exist various three-dimensional map images based on a place at which the body is located.

Moreover, according to the present disclosure, when a predetermined type of touch is applied to the touch screen 151 in a state that the electronic device 100 (for example, mobile terminal) is displayed thereon, a plan view image for a partial region including a current location of the body may be displayed within the predetermined place.

Here, the plan view image may be an image corresponding to an image in which at least partial region of a predetermined place is seen from the top. More specifically, the plan view image may be a horizontal projection view in which at least partial region of the predetermined place is cut on a horizontal surface at a predetermined height.

For example, when a current location of the body is located in a first region (for example, living room) of a predetermined place (for example, user's home), the plan view image may be an image illustrating the first region seen from the top.

On the other hand, though not shown in the drawing, the plan view image may be displayed to correspond to a direction directed from the body when the plan view image is displayed. For example, the plan view image may be displayed in such a manner that external devices corresponding to a direction directed from the body are disposed at the top side on the plan view image among the top, the bottom, the left and the right side of the plan view image.

Furthermore, as described above, an image corresponding to an external device may be displayed to overlap with the plan view image. In other words, the image object may be located to correspond to a location on the first region at which the external device is disposed on the plan view image. Accordingly, the user may control the external device using the plan view image in an intuitive and quick manner. It will be described later in more detail.

On the other hand, as described above, the plan view image may be displayed to correspond to a predetermined type of touch being applied in a state that that the three-dimensional map image is displayed. Hereinafter, a control method of mutual conversion between the images will be described in detail with reference to the accompanying drawings.

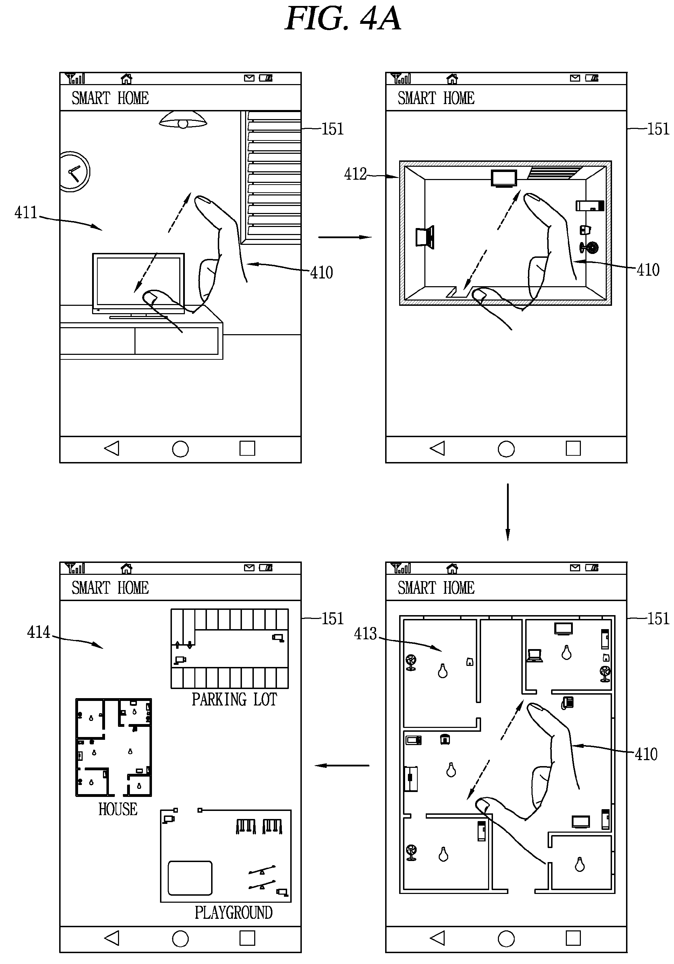

FIGS. 4A through 4I are conceptual views for explaining a control method for mutual conversion between various maps included in a control screen associated with the present disclosure.

Referring to the first and the second drawing of FIG. 4A, when a predetermined type of touch 410 is applied to the three-dimensional map image 411 in a state that the three-dimensional map image 411 is displayed on the touch screen 151, a plan view image 412 for a partial region including a current location of the body is displayed.

Here, the predetermined type of touch 410 may be the same type of touch as that of a predetermined type of touch linked to a function of displaying a control screen as described above.

In other words, a predetermined type of touch linked to a function of displaying a control screen is a pinch-out touch or pinch-in touch, the predetermined type of touch linked to a function of displaying the plan view image may be also a pinch-out touch or pinch-in touch. On the drawing, it is illustrated a case where the predetermined type of touch is a pinch-out touch.

Referring to the second drawing of FIG. 4A, a plan view image 412 for a partial region of the predetermined place is displayed on the touch screen 151. As described above, the partial region may be a first region (for example, living room) including a current location of the body.

Subsequently, referring to the second and the third drawing of FIG. 4A, when the predetermined type of touch (pinch-out touch as described above) 410 is applied in a state that the plan view image 412 for the first region is displayed, a plan view image 413 for a second region including the first region may be displayed.

Here, the second region may denote a region larger than the first region including the first region. For example, referring to the third drawing of FIG. 4A, the second region may be the predetermined place (for example, user's home) itself.

Subsequently, when a predetermined type of touch (pinch-out touch as described above) 410 is applied to the plan view image 413 in a state that the plan view image 413 for the predetermined place is displayed, an image 414 for the predetermined place and the surrounding places of the predetermined place may be displayed.

The surrounding places may be preset by the user. For example, when the predetermined place is a user's home, the surrounding places may be a parking lot, a playground and the like used by the user.

In other words, referring to FIG. 4A, a map image for at least partial region of a predetermined place is displayed on a control screen for performing control associated with the predetermined place. When a predetermined type of touch is applied to the map image, a map image different from a currently displayed map image is displayed.

In other words, referring to FIG. 4A, a plan view image 412 for a first region is displayed when a pinch-out touch 410 is applied in a state that a three-dimensional map image 411 is displayed, and a plan view image 413 for a second region (here, an entire predetermined place) including the first region is displayed when the pinch-out touch 410 is subsequently applied once more. Subsequently, when the pinch-out touch 410 is applied once more, a plan view image 414 for the predetermined place and the surrounding places of the place may be displayed. In other words, a map image for a larger area may be displayed whenever the pinch-out touch 410 is applied to the touch screen 151.

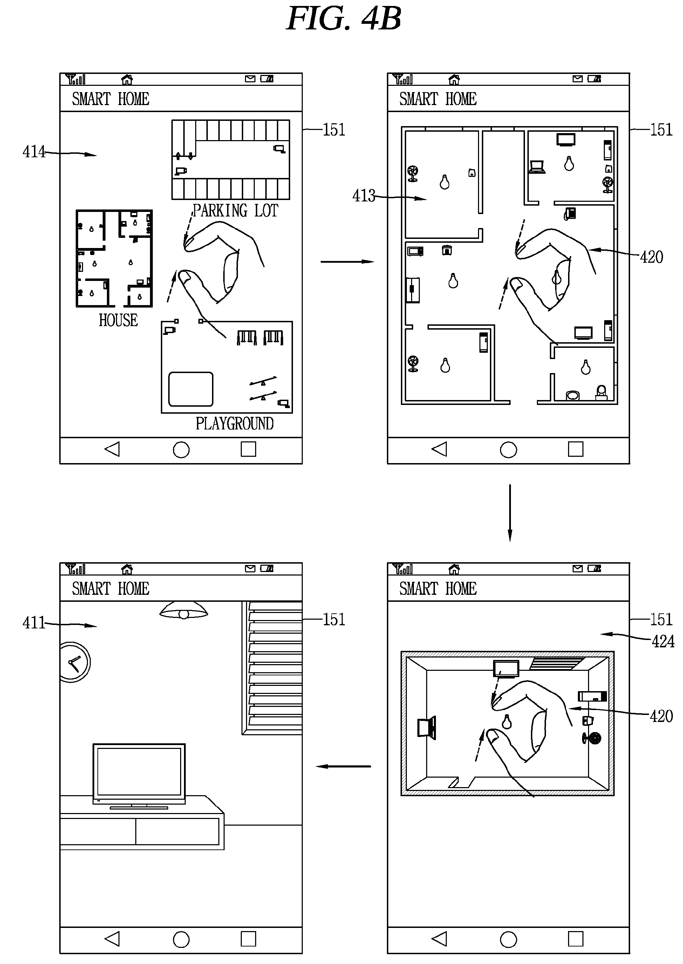

Furthermore, referring to FIG. 4B, when a pinch-in touch 420 is applied to a plan view image 414 in a state that the plan view image 414 for the predetermined place and the surrounding places of the place is displayed, a plan view image 413 for a second region of the predetermined place is displayed. Subsequently, when the pinch-in touch 420 is applied once more, a plan view image 412 for a first region included in the second region is displayed. Subsequently, when the pinch-in touch 420 is applied once more, a three-dimensional map image 411 for the first image may be displayed. In other words, a map image for a smaller area may be displayed whenever the pinch-in touch 420 is applied to the touch screen 151.

Up to this point, a case where the body is located at a first place (for example, user's home) among predetermined places, Even when the body is located at a second or third place different from the first place among the predetermined places, a map image for a variety range of regions such as the first or second place may be displayed in connection with the predetermined type of touch.

For example, when a predetermined type of touch is applied to a predetermined screen based on the body located at a second place (for example, user's office), a control screen capable of performing control on the second place is displayed.

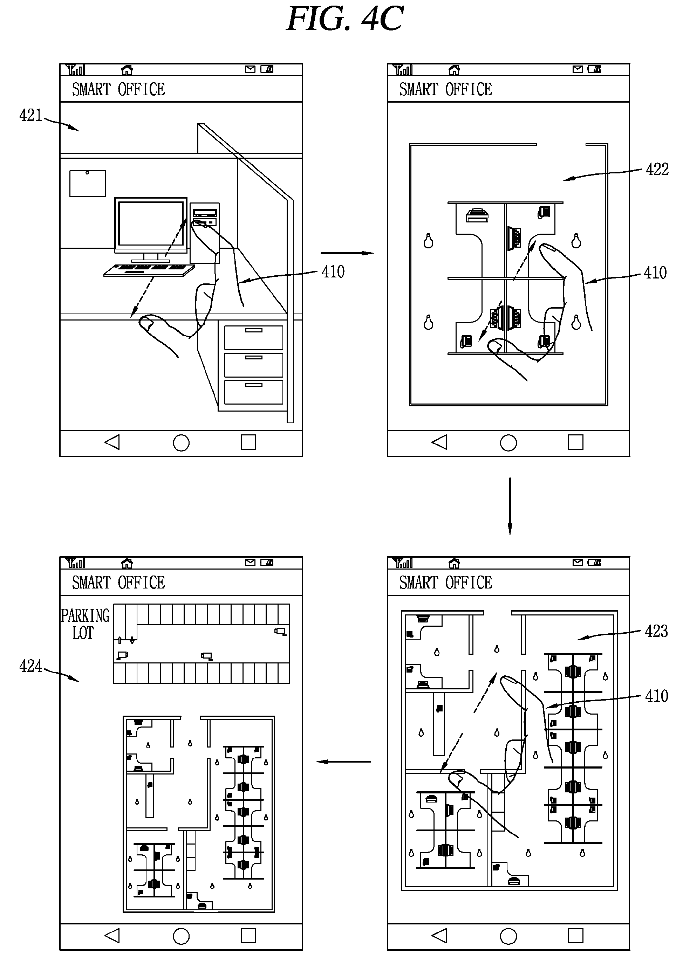

In this case, referring to FIG. 4C, the control screen may be a three-dimensional map image 421 for at least partial region of the second place. As described above, when a pinch-out touch 410 is applied to the three-dimensional map image 421, a plan view image 422 for a partial region of the second place is displayed. When a pinch-out touch 410 is applied to the plan view image 422, a plan view image 423 for a larger region of the second place including the partial region is displayed. Subsequently, when the pinch-out touch 410 is applied to the plan view image 423, a plan view image 424 for the second place and the surrounding places (for example, parking lot) of the second place may be displayed.

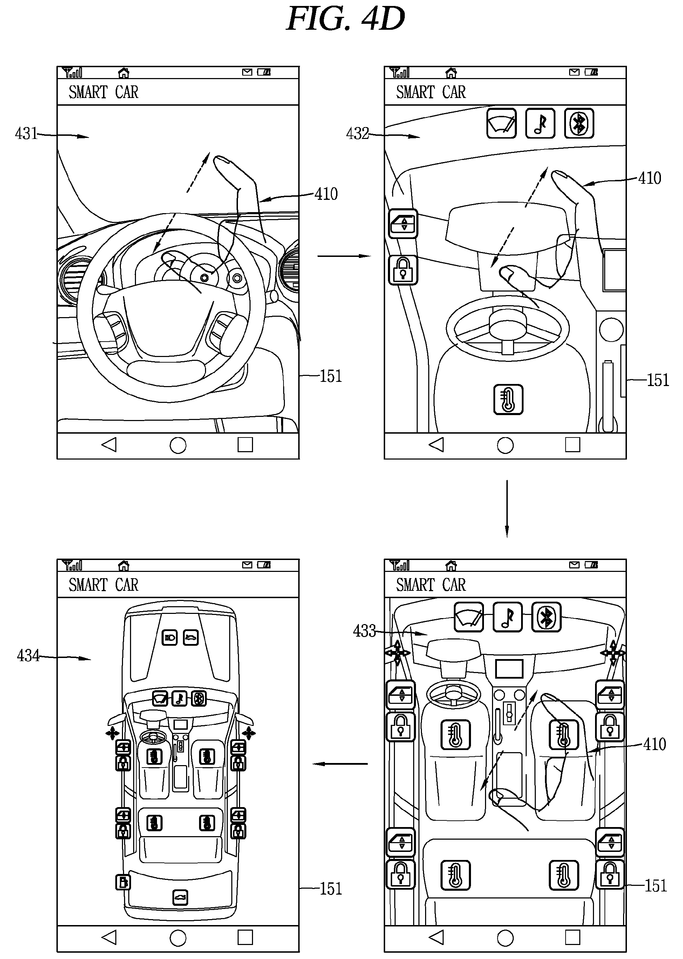

Furthermore, referring to FIG. 4D, even when the body is located at the third place (for example, user's car), a map image of the third place for a larger region may be gradually displayed in connection with the pinch-out touch 410.

For example, an initially displayed map image during the entry of the control screen may be a three-dimensional map image 431 for a driver seat. When a pinch-out touch 410 is applied to the image 431, a plan view image 432 for the driver's seat may be displayed. Subsequently, a plan view image 433 for all seats within the user's car and a plan view image 434 for the entire user's car may be sequentially displayed on the touch screen 151.

As illustrated in FIGS. 4A through 4D, a user may more efficiently perform control on a predetermined place using a map image for a variety of range of regions of a predetermined place.

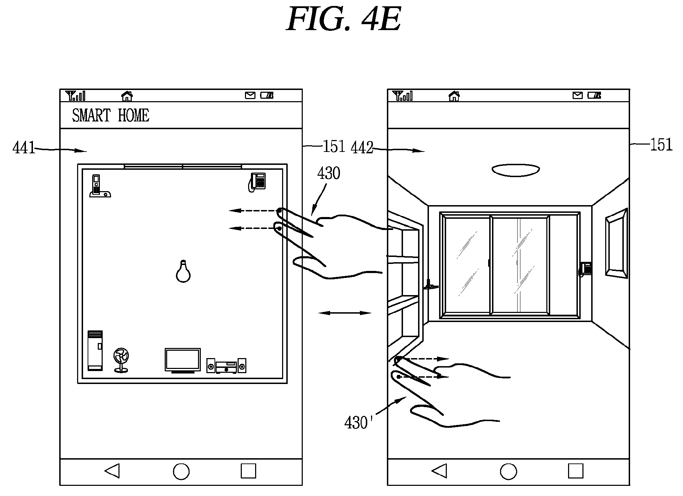

On the other hand, referring to FIG. 4E, when a predetermined type of touch (for example, a flick touch) 430 is applied to the touch screen 151 in a state that a plan view image 441 for a partial region of a predetermined place is displayed thereon, a stereoscopic view image 442 for the same region may be displayed.

In other words, when a predetermined type of touch 430 is applied to the touch screen 151 in a state that a first type of image 441 corresponding to a partial region of a predetermined place is displayed on the touch screen 151, a second type of image 442 corresponding to the partial region may be displayed.

Furthermore, when a predetermined type of touch 430' is applied to the touch screen 151 in a state that a second type of image 442 corresponding to a partial region of a predetermined place is displayed on the touch screen 151, a first type of image 441 corresponding to the partial region may be displayed.

On the other hand, in a mobile terminal according to the present disclosure, different types of map images may be displayed on the touch screen 151 based on the posture of the mobile terminal 100.

More specifically, the sensing unit 140 may sense an angle between the body 100 and the ground.

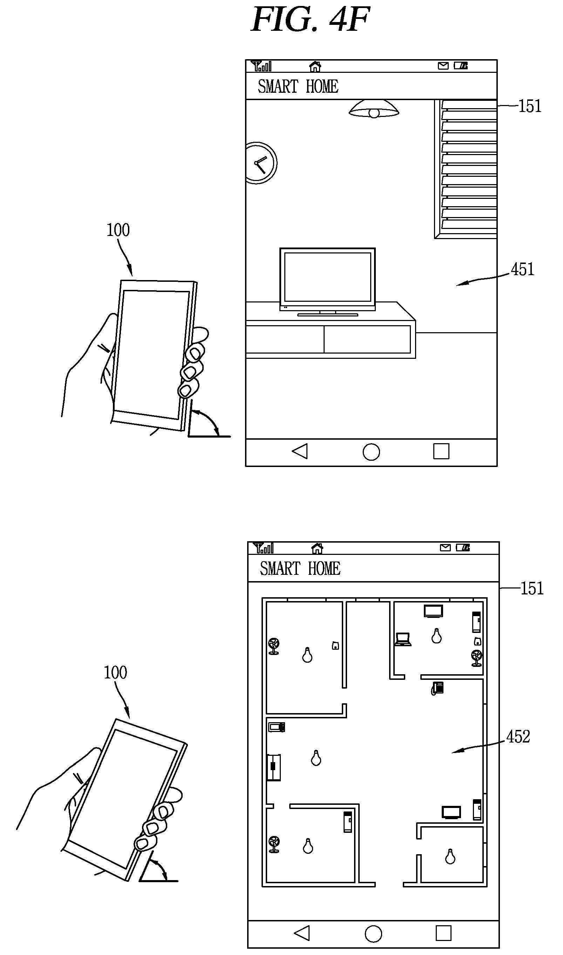

Referring to FIG. 4F, when an angle between the body 100 and the ground is above a predetermined value, a first type of image (for example, a stereoscopic view image) 451 with respect to a partial region of a predetermined place may be displayed. Furthermore, when an angle between the body 100 and the ground is below a predetermined value, a second type of image (for example, a plan view image) 452 for the same region may be displayed.

Accordingly, a user may more efficiently perform control on a predetermined place using various types of map images of a predetermined place.

Furthermore, according to the present disclosure, when a predetermined type of touch is applied to the touch screen in a state that an image corresponding to a partial region of a predetermined place is displayed on the touch screen 151, an image corresponding to a different region of the predetermined place may be displayed.

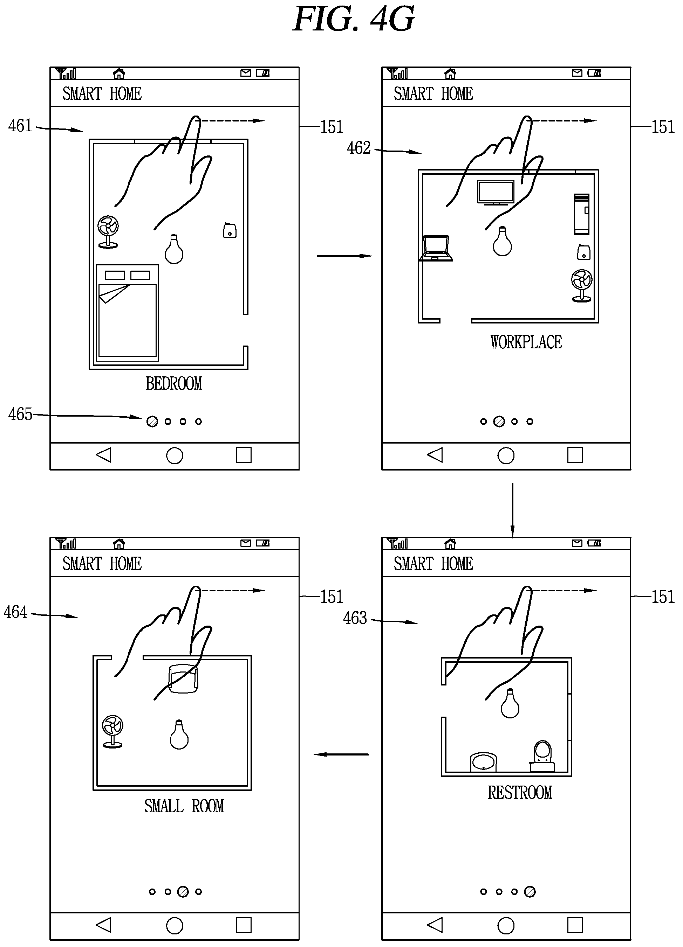

Referring to FIG. 4G, when a predetermined type of touch (for example, a flick touch with respect to one direction of the touch screen) is applied in a state that a plan view image 461 for a first region (for example, bedroom) of a predetermined place is displayed on the touch screen 151, a plan view image 462 for a second region (for example, workplace) of the predetermined place is displayed.

Similarly, when a predetermined type of touch is applied in a state that a plan view image 462 for the second region (for example, workplace) is displayed, a plan view image 463 for a third region (for example, restroom) is displayed.

Similarly, when a predetermined type of touch is applied in a state that a plan view image 463 for the third region (for example, bedroom) is displayed, a plan view image 464 for a fourth region (for example, small room) is displayed.

Furthermore, referring to FIG. 4G, an indicator 465 indicating that an image for which region is displayed on the touch screen 151.

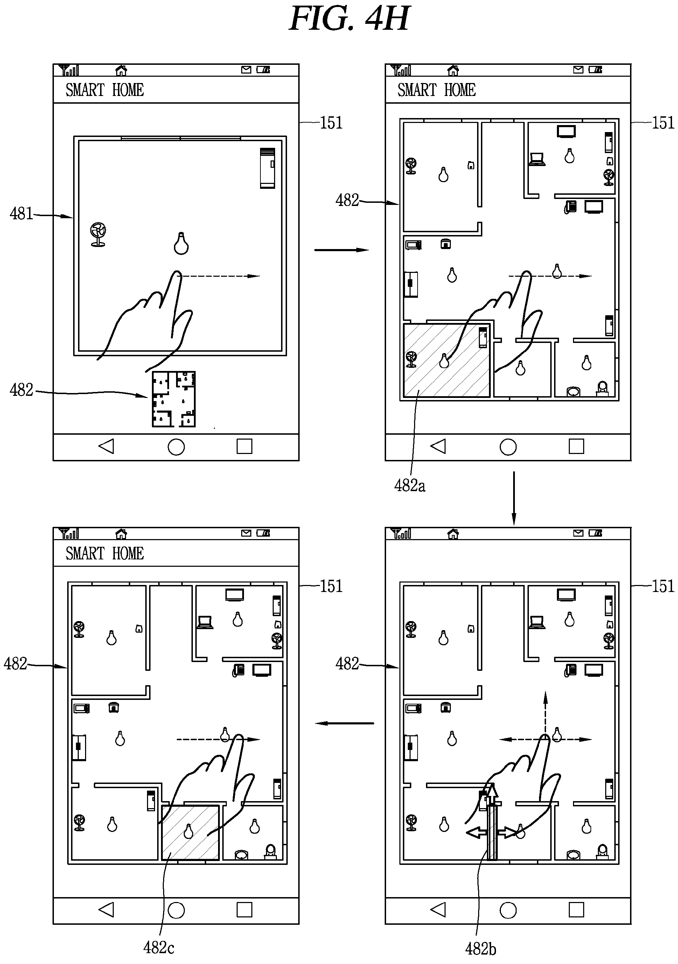

Referring to the first drawing of FIG. 4H, a plan view image 481 for a first region (for example, living room) of a predetermined place may be displayed along with an image object 482 displaying an entire map of the predetermined place on the touch screen 151.

Referring to the second drawing of FIG. 4H, when a predetermined type of touch is applied with respect to the image object 482, the image object 482 may be displayed in an enlarged manner. Furthermore, the image object 482 may include an object 482a highlighting one region in which the body 100 is currently located among the predetermined places.

On the other hand, referring to the second and the third drawing of FIG. 4H, when a predetermined type of touch is applied with respect to the plan view image 481, an object 482b highlighting a region different from the one region may be displayed on the image object 482 based on the direction of the applied touch.

On the other hand, referring to the third and the fourth drawing of FIG. 4H, guide information 483 in a touch direction may be displayed in the vicinity of the object 482b highlighting the different region on the image object 482.

More specifically, the guide information 483 in the touch direction may include at least one direction information of the top, the bottom, the left and the right side. When a drag touch corresponding to at least one direction of the top, the bottom, the left and the right side is applied based on the provided guide information 483, an object 482c highlighting another region on the image object 482 may be displayed based on the direction of the applied drag touch.

Though not shown in the drawing, when a predetermined type of touch is applied with respect to the image object 482, the image object 482 may be no longer displayed. Furthermore, a plan view image corresponding to the another region may be displayed.

As described up to now, a control screen for various regions of the predetermined place may be converted to each other through the image object 482 for displaying the map of a predetermined place.

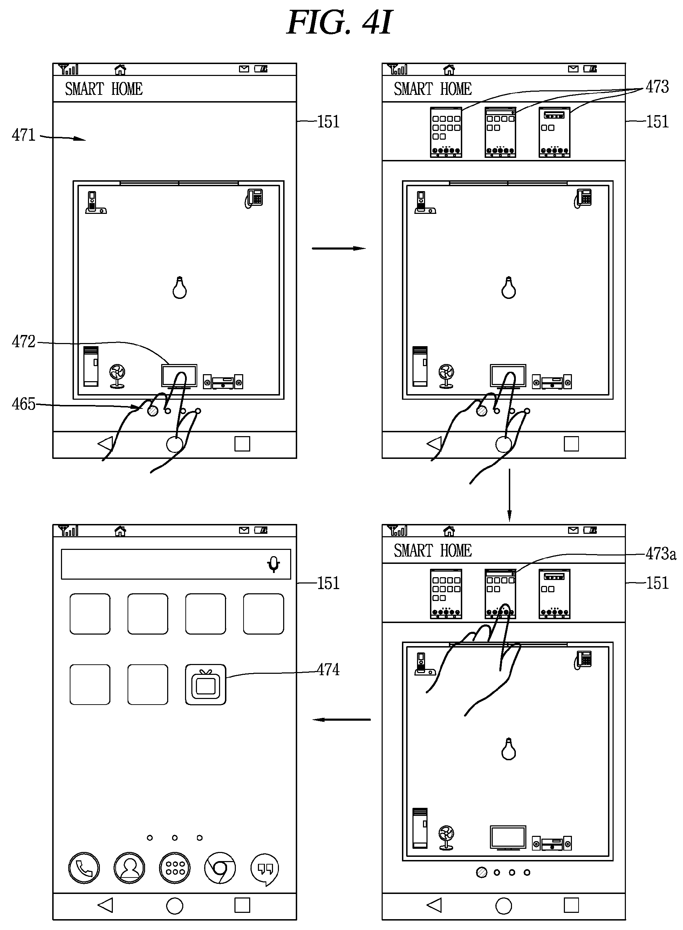

Referring to the first and the second drawing of FIG. 4I, when a predetermined type of touch (for example, a long touch) is applied to an image object 472 included in an image 471 in a state that the image 471 for any region of a predetermined place is displayed on the touch screen 151, a graphic object 473 corresponding to a home screen may be displayed.

Referring to the second and the third drawing of FIG. 4I, when there exist a plurality of home screens, a plurality of graphic objects corresponding to the home screens, respectively, may be displayed. When any one 473a of the graphic objects is selected, an icon 474 linked to a control screen of an external device corresponding to the image object 472 may be added to a home screen corresponding to the selected graphic object.

On the other hand, referring to FIG. 4I, an indicator 475 indicating that a currently displayed image is an image for which region may be displayed in one region of the touch screen 151.

Up to this point, a case where various ranges and types of map images are converted to each other, and displayed on the display unit has been described.

On the other hand, according to the present disclosure, the control screen may include an image object overlapping with the map image and corresponding to the external device. It may be possible to display the status information and notification information of an external device or perform the control of the external device through the image object.

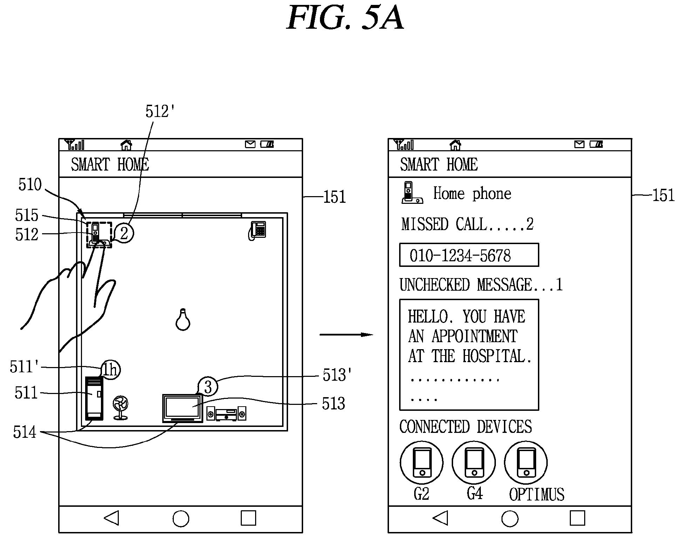

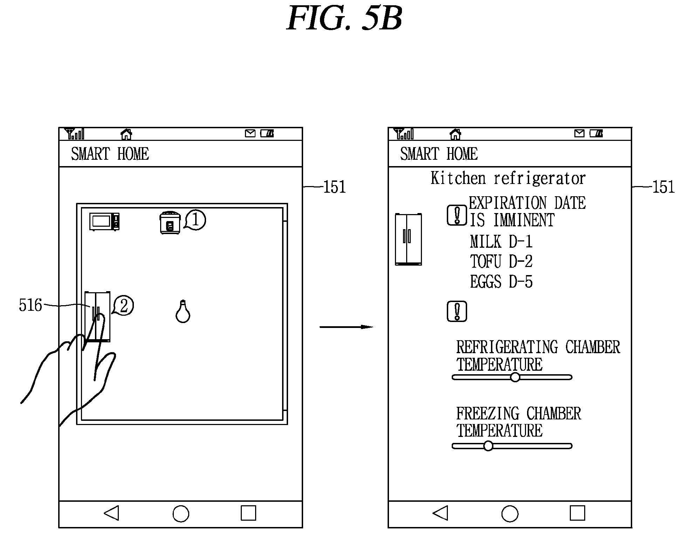

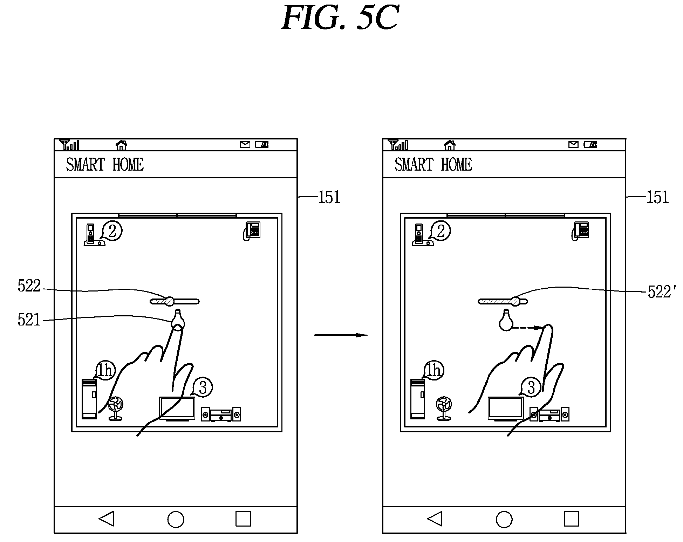

Hereinafter, the description of displaying the status information and notification information of an external device through the image object will be described with reference to FIGS. 5A and 5B, and then the description of performing the control of an external device through the image object will be described with reference to FIG. 5C.

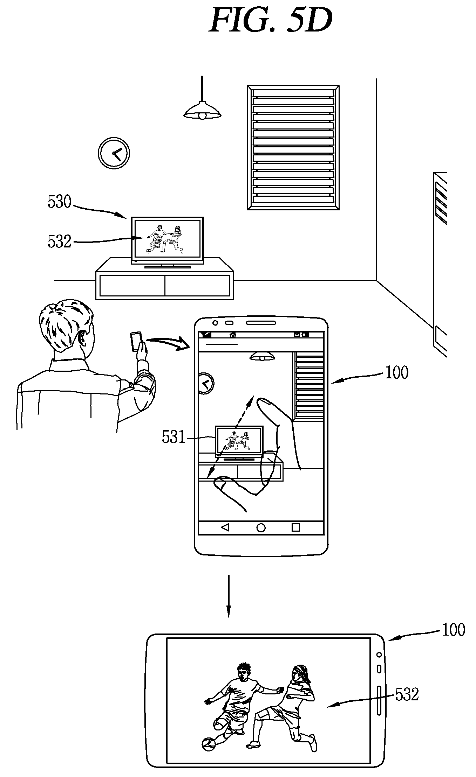

FIGS. 5A and 5B are conceptual views for explaining a control method for the display of the status information or notification information of an external device using an image object associated with the present disclosure. Furthermore, FIGS. 5C and 5D are conceptual views for explaining a control method of an external device using an image object.

Referring to the first drawing of FIG. 5A, a map image 510 for a partial region of a predetermined place displayed on the touch screen 151 may include image objects 511, 512, 513 corresponding to external devices disposed in the partial region.

Specifically, when there exists a plurality of the external devices, a plurality of image objects 511, 512, 513 corresponding to the external devices, respectively, on the map image.

Each image object may have color information or edge information. Information on the status of the external devices may be displayed on the touch screen 151 through the color information or edge information of the image object.

For an embodiment, when the image objects 511, 513 have first edge information 514, it may be a case where the power of an external device corresponding to the image object is off. Furthermore, when the image object 512 has second edge information 515, it may be a case where the power of an external device corresponding to the image object is on.

For an embodiment, when the image object has first color information, an external device corresponding to the image object may be in a state of being paired with the body. Furthermore, when the image object has second color information, an external device corresponding to the image object may be in a state of being not paired with the body.

Furthermore, referring to the first and the second drawing of FIG. 5A, the notification icons 511', 512', 513' of external devices corresponding to the image objects 511, 512, 513 may be displayed at a location overlapping with or adjacent to the image object. When a touch is applied to the notification icons 511', 512', 513' or the image objects 511, 512, 513, the notification information of the external devices may be displayed.

Specifically, the detailed description of the notification information may vary for each external device. For example, as illustrated in the first and the second drawing of FIG. 5A, when a touch is applied to the image object 512 or notification icon 512 corresponding to a "phone," the description of phone numbers that have been received by the "phone" but not responded by the user, unchecked messages, or the like may be displayed.

For another example of the notification information, as illustrated in the first and the second drawing in FIG. 5B, when a touch is applied to an image object 516 or notification icon 516' corresponding to a "refrigerator," notification information on the "refrigerator" may be displayed.

For example, referring to the second drawing of FIG. 5B, the controller 180 may compare the expiration date of foods stored in the "refrigerator" with a current date to display information on the remaining period up to the expiration date. Here, the expiration date may be pre-stored in the memory or the like by the user when the foods are stored in the refrigerator.

Up to this point, the display modes or the like of the status information and the notification information of external devices using the image objects have been described.

On the other hand, as described above, according to the present disclosure, it may be possible to perform control on external devices corresponding to the image objects based on a touch applied to the image object. In other words, when a predetermined type of touch is applied to the image object, the controller 180 may generate a control command of an external device corresponding to the image object.

The control command may be directly transmitted to the external device through the wireless communication unit 110 of the body. Alternatively, the control command may be transmitted to the external device through a predetermined server provided at a predetermined place.

For example, referring to FIG. 5C, when a predetermined type of touch is applied to an image object 521 corresponding to an external device (for example, "lighting fixture" ), control linked to the touch may be carried out for the external device (for example, "lighting fixture").

Specifically, the power of the "lighting fixture" may be turned on based on a touch applied to the image object 521 in a state that the power of the "lighting fixture" is turned off.

For another embodiment, when a drag touch is applied to an image object 521 corresponding to the "lighting fixture," the brightness of the "lighting fixture" may vary based on a length of the dragged trajectory.

Furthermore, a brightness display bar 522 associated with the brightness of the "lighting fixture" may be displayed at a location adjacent to the image object 521. The brightness display bar 522, 522' of the "lighting fixture" may be differently displayed according to the extent of changing the brightness of the "lighting fixture."

On the other hand, though not shown in the drawing, when a drag touch is applied to an image object corresponding to a "fan," an airflow rate of the "fan" may be changed based on a length of the dragged trajectory.

Furthermore, referring to FIG. 5D, when a predetermined touch (for example, a pinch-out touch) is applied to an image object 531 corresponding to a "TV" 530 among external devices, screen information 532 currently being displayed on the "TV" 530 may be transmitted to the body 100.

As described above, the screen information 532 may be transmitted to the body 100 through the wireless communication unit 110 additionally provided in the "TV" 530 or transmitted to the body 100 via a predetermined server.

Through this, a video that has been displayed through a TV set may be displayed on the touch screen 151 of the mobile terminal without a complicated process. As a result of the determination, the user may continuously view a video that has been viewed through a TV set through the terminal body even when getting out of his or her home.

Up to now, a method of allowing the controller to control an external device corresponding to an image object based on a predetermined type of touch applied to the image object included in a map image displayed on the touch screen 151 has been described.

On the other hand, according to the present disclosure, when a touch is applied to the image object, an external device may be controlled based on a user's input entered through a window subsequent to displaying the window for the control of the external device corresponding to the image object. It will be described below in more detail with reference to the accompanying drawings.

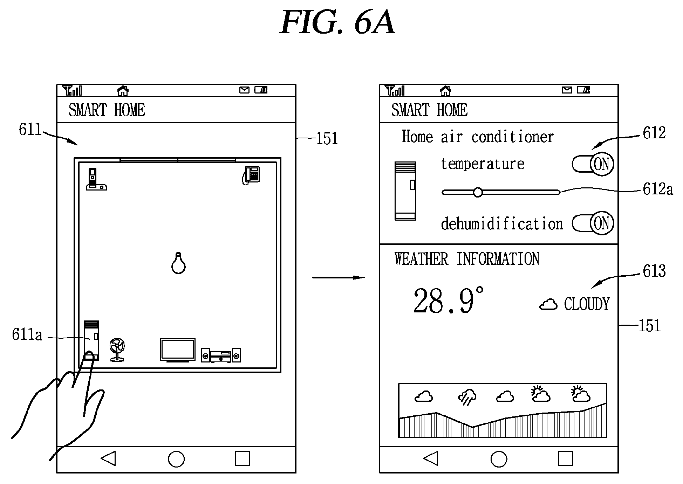

FIGS. 6A through 6E are conceptual views for explaining a control method of an external device based on a user's input entered through a window associated with the present disclosure.

Referring to FIG. 6A, on the touch screen 151 a plan view image 611 for a partial region of a predetermined place includes an image object for an external device disposed in the partial region.

For example, when a touch is applied to an image object 611 a corresponding to an "air conditioner" among the image objects, a first window 612 including a temperature control bar 612a and a second window 613 including weather information may be displayed.

The temperature and intensity of wind flowing out of the air conditioner may be controlled in response to a predetermined type of touch applied to the temperature control bar 612a. For example, the temperature and intensity of the wind may be controlled based on a position on the temperature control bar 612a corresponding to a position from which the touch is released.

Though not shown in the drawing, when a predetermined type of touch is applied to an image object corresponding to a "boiler," similarly to the foregoing example, a window including a "temperature control bar." The temperature of a boiler may be controlled in response to a predetermined type of touch applied to the temperature control bar.

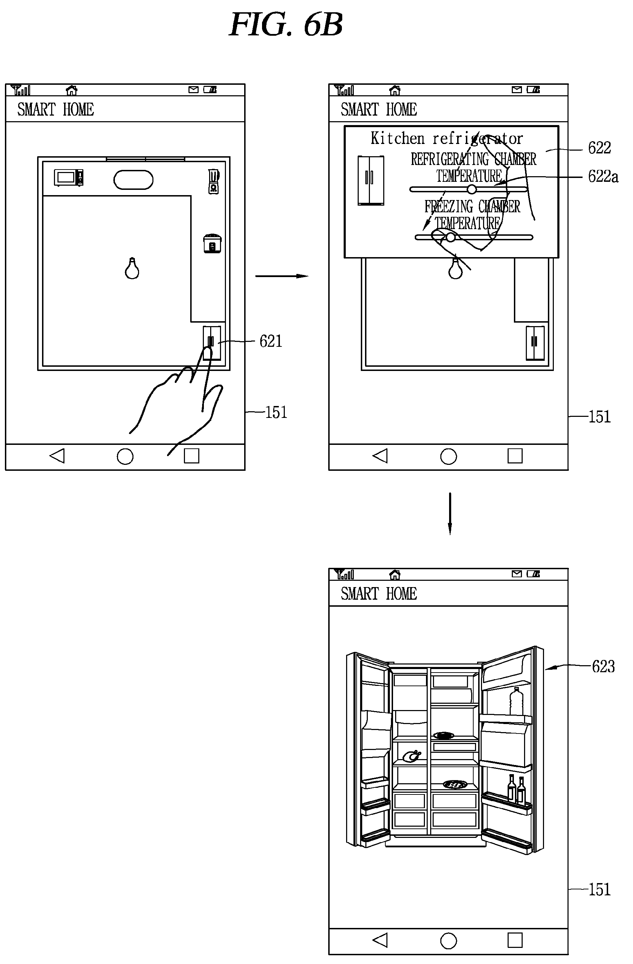

Referring to FIG. 6B, similarly to the foregoing example, when a predetermined type of touch (for example, a short touch) is applied to an image object 621 corresponding to a "refrigerator," a window 622 including a temperature control bar 622a of the refrigerating chamber and/or freezing chamber may be displayed. The temperature of the refrigerating chamber and/or freezing chamber may be controlled in response to a predetermined type of touch applied to the temperature control bar 622a.

Moreover, a predetermined type of touch (for example, a pinch-out touch as illustrated in the drawing) is applied to the window 622, an image associated with an inside of the "refrigerator" may be displayed. The image 623 may be an image being received in real time from a camera installed in the "refrigerator."

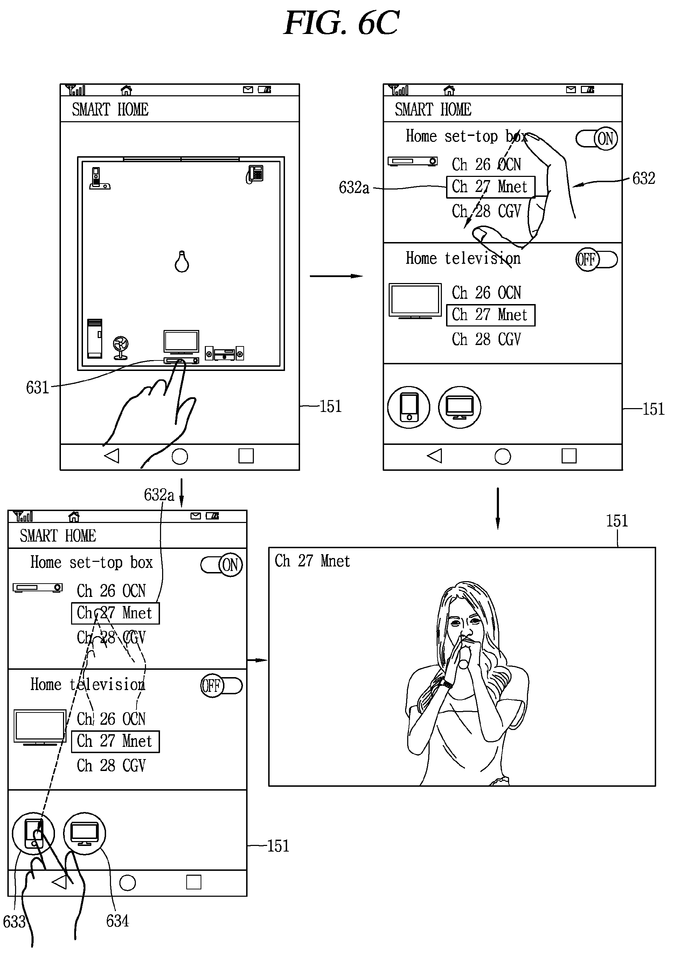

Referring to FIG. 6C, similarly to the foregoing example, when a predetermined type of touch is applied to an image object 631 corresponding to a "TV set" or "set-top box", a window capable of allowing a user to change a TV channel.

Referring to the second and the third drawing of FIG. 6C, event when a predetermined type of touch (for example, a pinch-out touch) is applied to the window 632, an image of a currently selected channel may be displayed on the touch screen 151 of the terminal.

Alternatively, referring to the third and the fourth drawing of FIG. 6C, an icon 633 corresponding to a mobile terminal may be displayed along with the window 632 on the touch screen 151. In this case, a drag touch with a position on an image object 632a corresponding to the plurality of channels as a start point and a position on an icon 633 corresponding to the mobile terminal as a release point may be applied. The image of a channel corresponding to the image object 632a may be displayed on the touch screen 151 by the drag touch.

On the other hand, an icon 634 corresponding to a TV set may be displayed along with the window 632 on the touch screen 151. In this case, a drag touch with a position on an image object 632a corresponding to the plurality of channels as a start point and a position on an icon 63 corresponding to the TV set as a release point may be applied. The image of a channel corresponding to the image object 632a may be also displayed on the TV set by the drag touch.

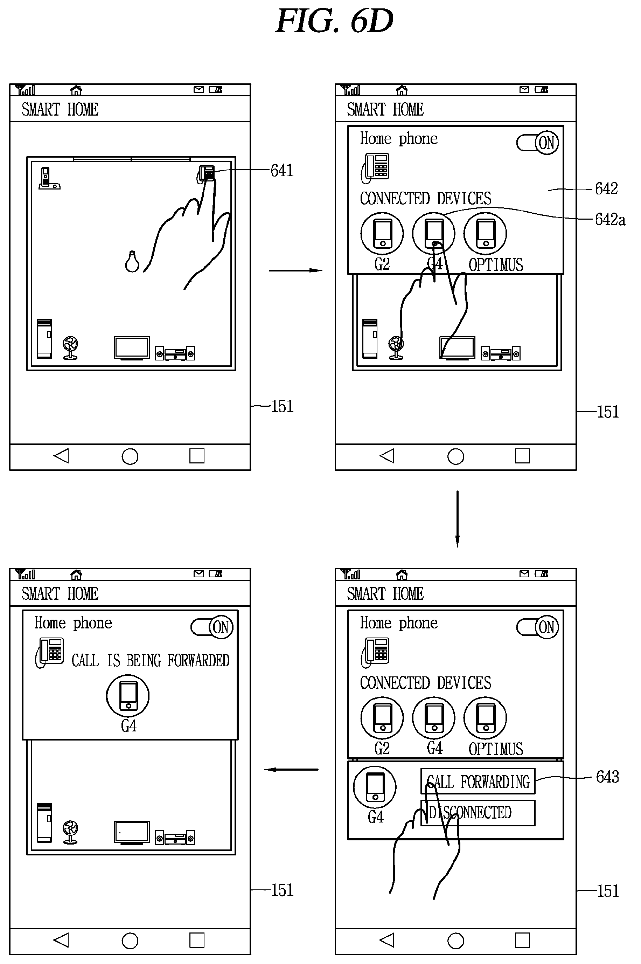

Referring to FIG. 6D, when a predetermined touch is applied to an image object 641 corresponding to a "first phone," a window 642 for the control of the "first phone" is displayed on the touch screen 151.

On the window, icons corresponding to another "second phone" or "mobile terminal" paired with the "first phone" may be displayed. When one of the icons is selected, a call received at the first phone may be connected to a "mobile terminal" corresponding to the selected icon 642a.

Alternatively, when one 642a of the icons is selected and then a touch is applied to a virtual button 643 for call forwarding, a control command associated with connecting a call received at the first phone to a mobile terminal corresponding to the selected icon 642a may be formed.

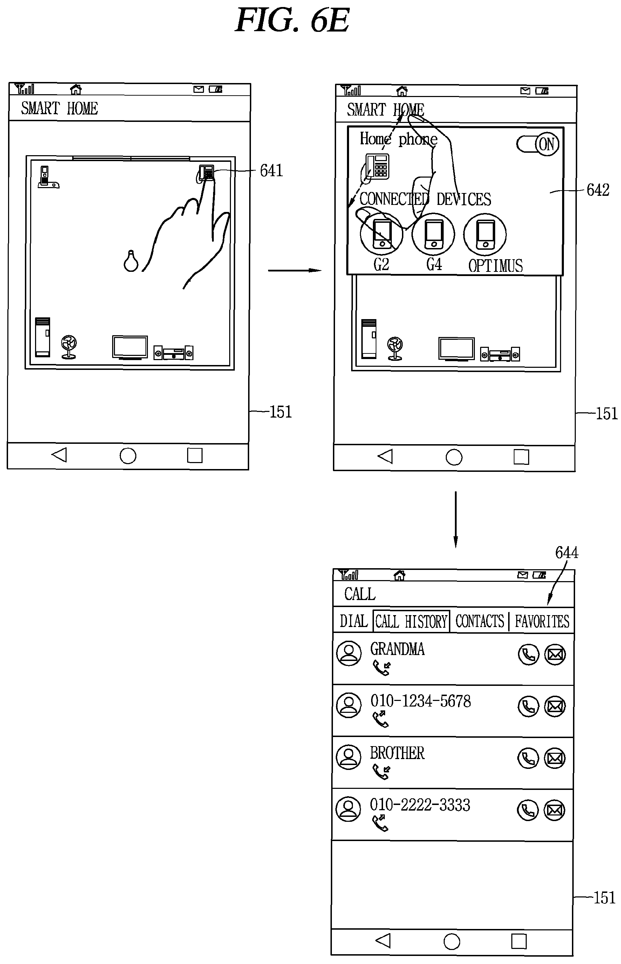

Subsequently, referring to FIG. 6E, when a predetermined type of touch (for example, a pinch-out touch) is applied to a window 642 for the control of the "first phone," information 644 on a call history of the "first phone" may be displayed.

Up to the present, a method of allowing the controller 180 to individually control external devices, respectively, has been described. On the other hand, the external devices may be collectively controlled. Hereinafter, it will be described in more detail with reference to the accompanying drawings.

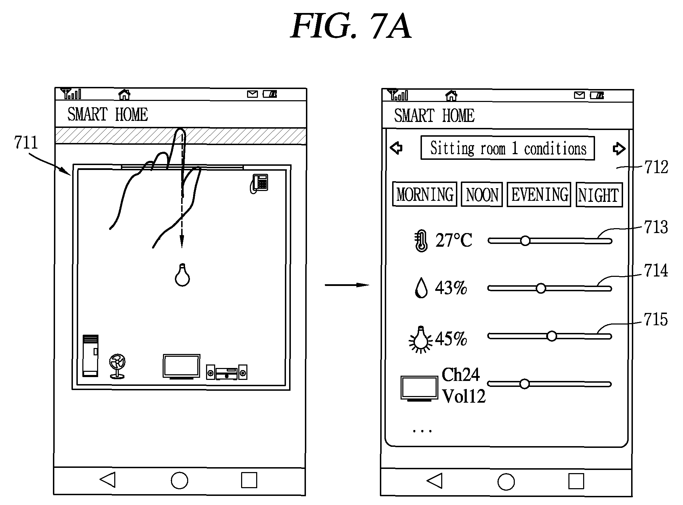

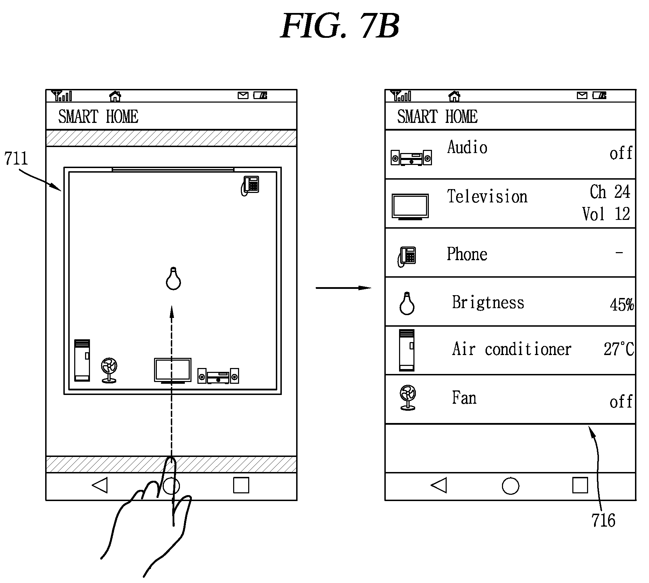

FIGS. 7A and 7B are conceptual views for explaining a window for controlling a plurality of external devices associated with the present disclosure.

Referring to FIG. 7A, when a predetermined type of touch (for example, a flick touch in a downward direction) is applied in a state that a map image 711 for a partial region of a predetermined place is displayed on the touch screen 151, a window 712 for control associated with the temperature, humidity, illuminance, and the like of the partial region may be displayed.

More specifically, the window 712 may include at least one of a temperature control bar 713, a humidity control bar 714 and an illuminance control bar 715.

For example, when a predetermined type of touch is applied to the temperature control bar 713, the temperature of a partial region may be controlled through an external device such as an air conditioner, a fan or the like, disposed at the partial region of the predetermined place.

Furthermore, referring to FIG. 7B, when a predetermined type of touch (for example, a flick touch in an upward direction) is applied in a state that a map image 711 for a partial region of a predetermined place is displayed on the touch screen 151, a list of external devices disposed in the region and the status information 716 of the external devices may be displayed.

On the other hand, though not shown in the drawing, when a flick touch with two fingers is applied, a list of external devices disposed at the entire predetermined place and the status information of the external devices may be displayed.

On the other hand, when a user's request for ending control on a predetermined place is received, the controller 180 may control the touch screen 151 not to display the control screen.

In other words, when a user's request for ending control on a predetermined place is received, the controller 180 according to the present disclosure may control the touch screen 151 to display a home screen.

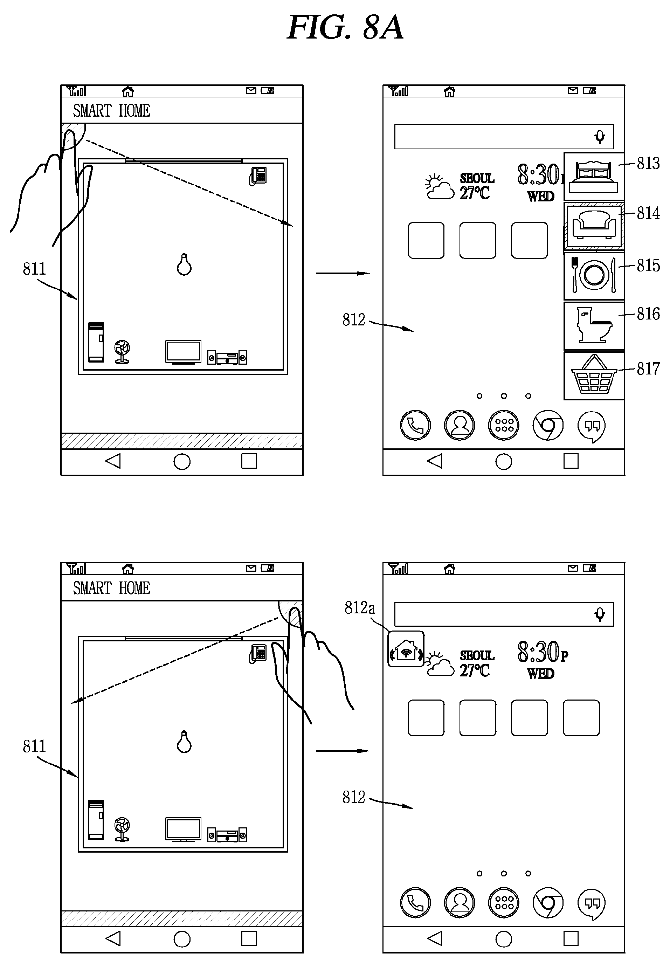

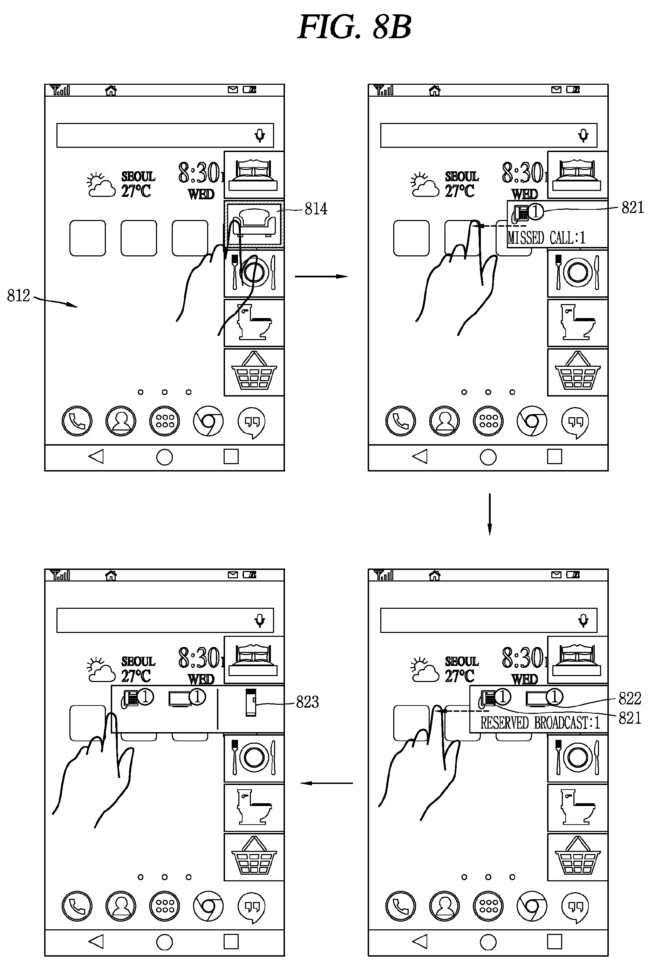

FIGS. 8A and 8B are conceptual views for explaining a control method associated with the end of a control screen of a predetermined place.

Referring to FIG. 8A, when a predetermined type of touch is applied in a state that the control screen 811 of a predetermined place is displayed on the touch screen 151, the screen may be switched from the control screen 811 to the home screen 812.

In other words, as illustrated in the drawing, when a drag touch with an edge of the touch screen 151 as a start point and another edge thereof as an end point is applied, the control screen 811 may be ended.

Here, a representative icon 812a linked to the control screen may be displayed or icons 813, 814, 815, 816, 817 corresponding to each region of the predetermined place may be displayed on the home screen 812 based on the direction of the applied drag touch.

For example, referring to the third and the fourth drawing of FIG. 8A, when a drag touch is applied in one direction in a state that the control screen 811 is displayed, a representative icon 812a linked to the control screen may be displayed in a region adjacent to a position at which the drag touch is ended on the home screen 812.

Furthermore, referring to the first and the second drawing of FIG. 8A, when a drag touch is applied in a direction opposite to the one direction in a state that the control screen 811 is displayed, icons 813, 814, 815, 816, 817 corresponding to each region may be displayed in a region adjacent to a position at which the drag touch is ended on the home screen 812.

For example, icons 813, 814, 815, 816, 817 corresponding to each region of the predetermined place may be icons corresponding to a "bedroom," a "living room," a "kitchen," and a "restroom" at a "user's home."

Furthermore, the icon 814 corresponding to a region in which the body is currently located among the regions may be additionally displayed.

On the other hand, according to the present embodiment, it is illustrated that a representative icon 812a is displayed when a drag touch is applied in the left direction, and a plurality of icons 813, 814, 815, 816, 817 corresponding to each region are displayed when the drag touch is applied in the right direction in a state that the control screen is displayed, but the present disclosure may not be necessarily limited to this.

According to another embodiment, any one of the representative icon 812a and the icons 813, 814, 815, 816, 817 corresponding to each region may be controlled to be displayed based on a length of trajectory in which the drag touch is applied.

Furthermore, according to still another embodiment, it may be possible to display a plurality of icons corresponding to each external device instead of a plurality of icons 813, 814, 815, 816, 817 corresponding to the each region.

When an event occurs on an external device in a state that the home screen 812 is displayed, a notification icon for notifying the event may be displayed at a position overlapping with or adjacent to the icon 814 corresponding to a region in which the external device is disposed.

Referring to the first and the second drawing of FIG. 8B, when a predetermined type of touch (for example, a drag touch) is applied to an icon 814 corresponding to the region, an icon 821 corresponding to an external device on which the event has occurred may be displayed.

Furthermore, when there exists a plurality of external devices on which events have occurred, if a length of trajectory of the drag touch increases, then icons 821, 822 corresponding to the plurality of external devices, respectively, on which the events have occurred may be displayed.

Referring to the third drawing of FIG. 8B, the plurality of icons 821, 822 may be displayed in a sequence corresponding to external devices recently used by the user. Alternatively, the plurality of icons 821, 822 may be displayed in a sequence corresponding to external devices frequently used by the user.

Referring to the fourth drawing of FIG. 8B, an icon 823 corresponding to an external device on which an event has not occurred may be also displayed along with the icons 821, 822 corresponding to external devices on which events have occurred.

On the other hand, according to the present disclosure, information on an event occurred on an external device may be displayed even in a state that a home screen is displayed on the touch screen. Furthermore, when a predetermined type of touch is applied to the information on the event, it may be possible to enter a control screen capable of controlling the external device or immediately control the external device. It will be described in more detail with reference to the accompanying drawings.

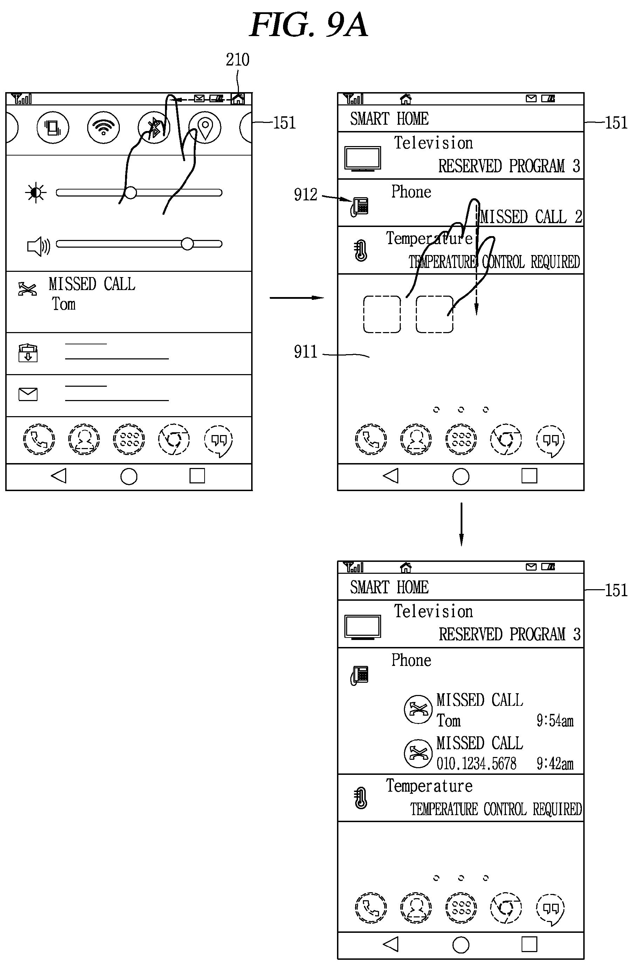

FIGS. 9A through 9E are conceptual views for explaining various embodiments of displaying information on an event occurred on an external device.

Referring to FIG. 9A, when an event occurs on at least one external device disposed at a predetermined place at which the body is located, a notification icon 210 for notifying the event occurrence may be displayed on a status display bar. When a predetermined type of drag touch is applied to the notification icon 210, information on an event occurred on the external device may be displayed.

Alternatively, when an event occurs on an external device disposed at a predetermined place at which the body is located in a state that a home screen 911 is displayed on the touch screen 151, information on the event may be displayed.

For example, when an event indicating that a missed call has been received occurs on a phone, event information 912 indicating that the missed call has been received may be displayed to overlap with a home screen. Furthermore, when a predetermined type of touch is applied to the event information, the detailed information of the event information may be displayed. The detailed information may be information on an originator of the missed call, a time at which an event of the missed call has occurred.

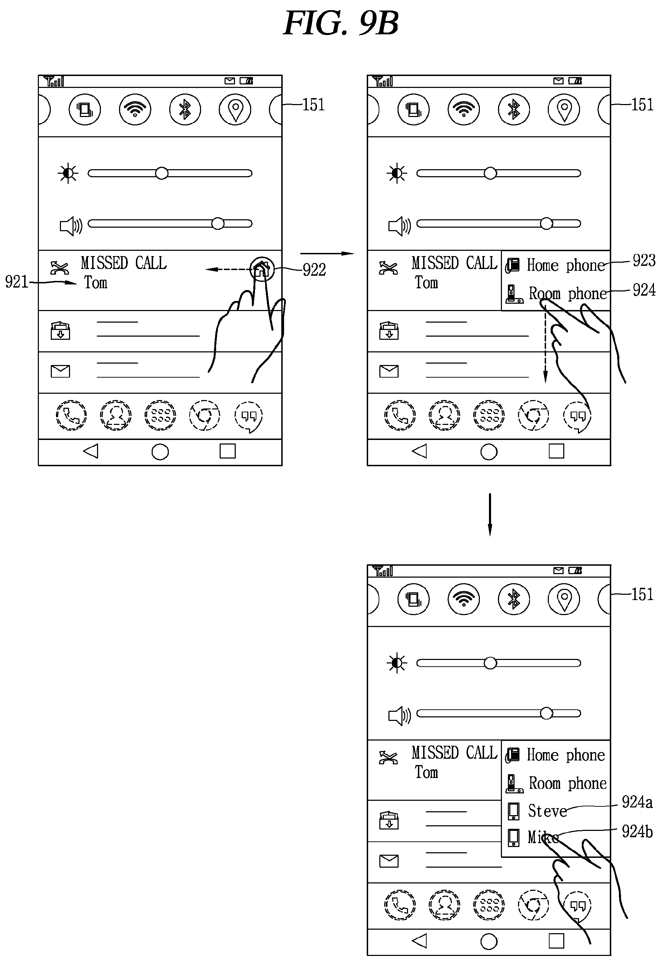

On the other hand, referring to FIG. 9B, when an event associated with a missed call occurs on the mobile terminal 100, the controller 180 displays information 921 associated with the event and an icon 922 indicating that the control of an external device at a place at which the mobile terminal is located is enabled.

When a touch is applied to the icon 922, icons 923, 924 corresponding to each region of places in which the mobile terminals are located may be displayed. Furthermore, when an icon corresponding to one region is selected, icons 924a, 924b corresponding to a plurality of phones installed in the region may be displayed. When any one of the plurality of icons 924a, 924b is selected, a call connection signal may be transmitted to a terminal of the originator of the missed call through a phone corresponding to the selected icon 924b.

On the other hand, information 921 on the event may be information on an event associated with a missed call occurred on any phone disposed at the predetermined place. In this case, when the icon 922 is selected, a call connection signal may be transmitted to a terminal of the originator of the missed call through the mobile terminal 100.

Alternatively, when a predetermined type of drag touch is applied to the icon 922, icons 923, 924 corresponding to a plurality of phones installed at the predetermined place may be displayed. When a touch is applied to any one of the icons, a call connection signal may be transmitted to a terminal of the originator of the missed call through a phone corresponding to an icon to which the touch is applied.

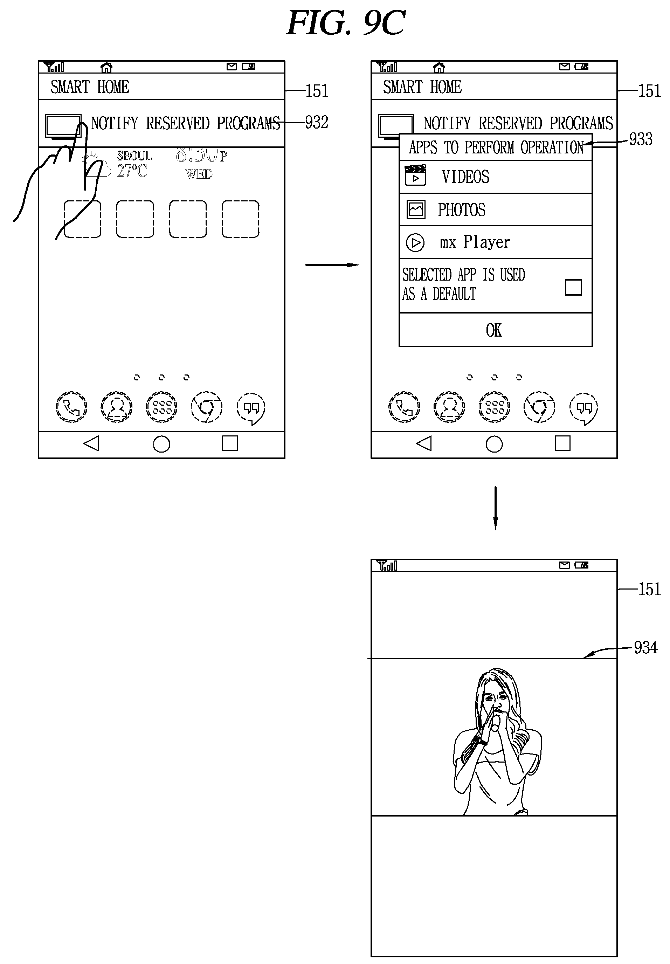

Referring to FIG. 9C, notification information 932 associated with reserved TV programs may be displayed in a state that a home screen 931 is displayed on the touch screen 151. When a touch is applied to the notification information 932, a window 933 for selecting an application to display the reserved programs may be displayed. When any one of applications is selected through the window 933, the reserved programs 934 may be displayed on the touch screen 151 in the form of videos through the selected application.

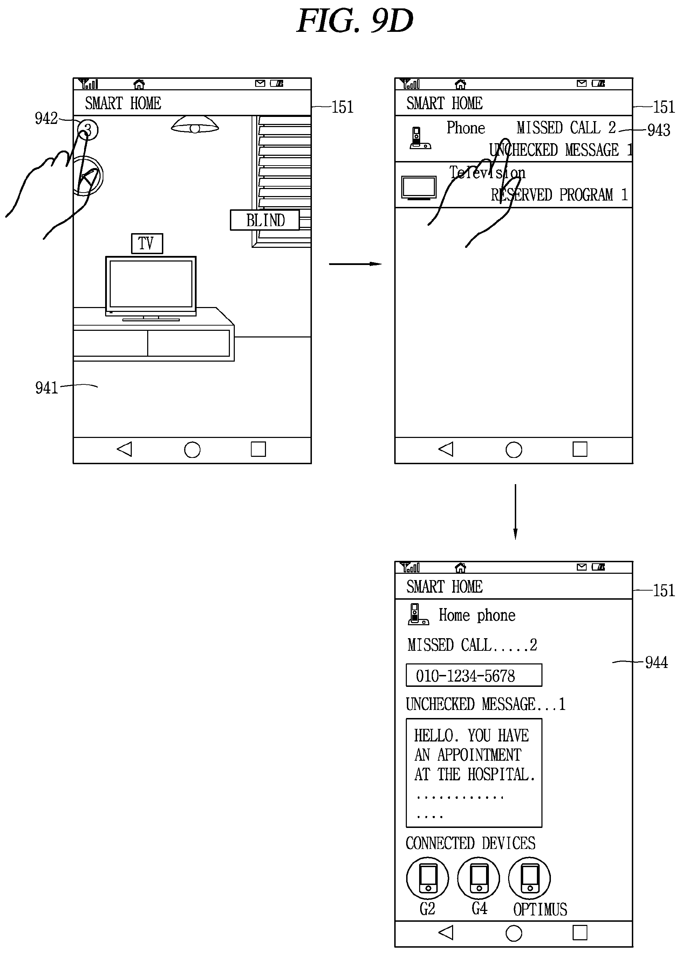

Referring to FIG. 9D, when an event occurs on an external device in a state that a control screen 941 for the control of the external device at a predetermined place at which the mobile terminal is located is displayed on the touch screen 151, the controller 180 controls the touch screen 151 to display notification information 942 indicating that the event has occurred.

When a touch is applied to the notification information 942, information 943 on an external device on which the event has occurred may be displayed. When there exists a plurality of external devices on which the event has occurred, information on the plurality of external devices may be displayed in the form of a list. When a touch is applied to the information 943 on an external device on which the event has occurred, the detailed information 944 of the event may be displayed.

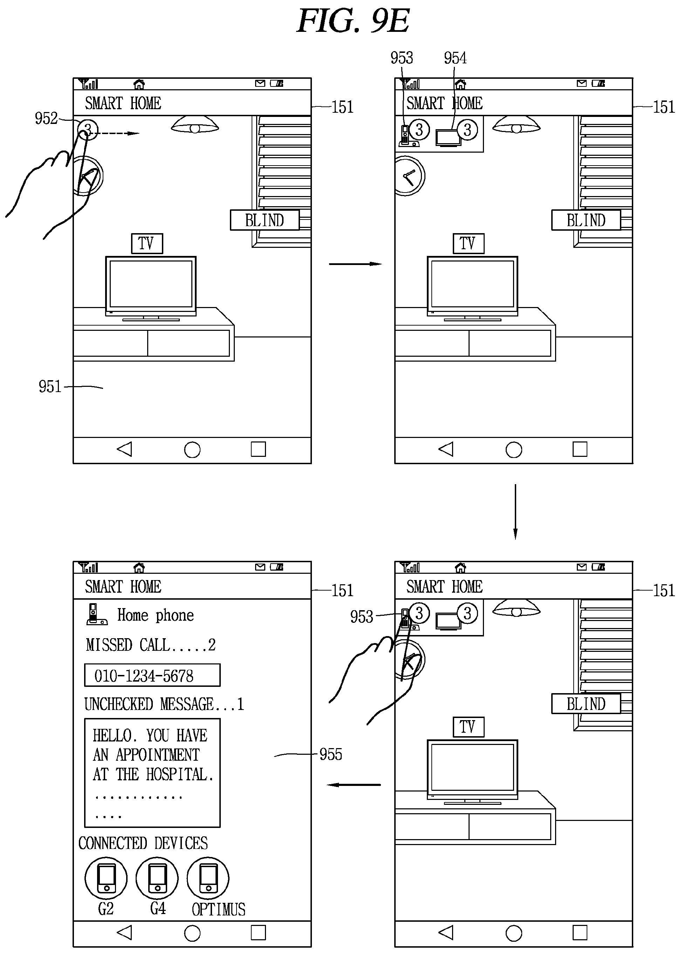

Referring to FIG. 9E, when an event occurs on the external device in a state that a control screen 951 for the control of an external device at a predetermined place is displayed on the touch screen 151, the controller 180 controls the touch screen 151 to display notification information 952 indicating that the event has occurred.

When a touch is applied to the notification information 952, icons 953, 954 corresponding to external devices on which the event has occurred may be displayed. When a touch is applied to any one 953 of the icons, the detailed information 955 of the event on an external device corresponding to the icon may be displayed.

Accordingly, a user immediately recognizes an event occurred on an external device regardless of the type of currently displayed screen.

On the other hand, when the notification mode is set to a sensitive mode, the mobile terminal 100 associated with the present disclosure may display the notification information of an external device using a plurality of different notification panels.

More specifically, the plurality of notification panels may include a first and a second notification panel. Notification information associated with applications installed in the mobile terminal 100 may be displayed on the first notification panel, and notification information of an external device associated with the present disclosure may be displayed on the second notification panel.

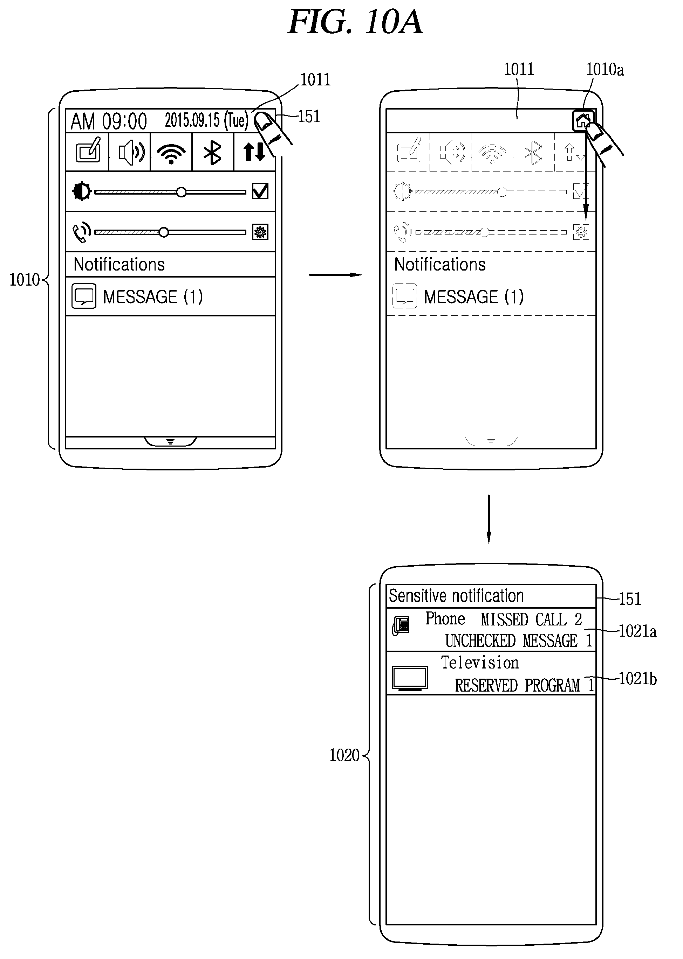

FIGS. 10A through 10D are conceptual views for explaining a method of displaying the notification information of an external device when a notification mode according to an embodiment of the present disclosure is set to a sensitive mode.

According to the present disclosure, when the notification mode is set to a sensitive mode, the notification information may not be displayed on the touch screen 151 even when an event occurs on the external device.

In other words, when the notification mode is set to a sensitive mode, the mobile terminal 100 associated with the present disclosure may not display the notification information on the first notification panel even if the notification information of an external device is received. Then, the controller 180 may display the second notification panel displayed with the notification information on the touch screen 151 based on a drag touch started from one region of the first notification panel (for example, a region adjacent to one edge of the first notification panel) and applied in one direction.

On the other hand, the present disclosure may display the second notification panel displayed with the notification information of an external device in various ways on the touch screen 151.

For example, when one region 1011 of the first notification panel 1010 is touched in a state that the first notification panel 1010 is displayed as illustrated in the first drawing of FIG. 10A, the controller 180 may display a notification icon 1010a associated with an external device in the one region as illustrated in the second drawing of FIG. 10A.

Here, the notification icon 1010a associated with an external device may be an icon of an application for performing an access to a control screen for controlling an external device.

Then, the controller 180 may display the second notification panel 1020 including (displayed with) the notification information 1021 a, 1021b of external devices on the touch screen 151 on the touch screen 151 based on a drag touch started from the icon 1010a and applied in one direction (for example, downward direction) as illustrated in the third drawing of FIG. 10A.

Here, the notification information 1021 a, 1021b of the external device may be notification information for notifying an event occurred on the external device disposed at a place at which the body is located. For example, it may be notification information of an event associated with a "missed call" occurred on a phone disposed at a place at which the body is located.

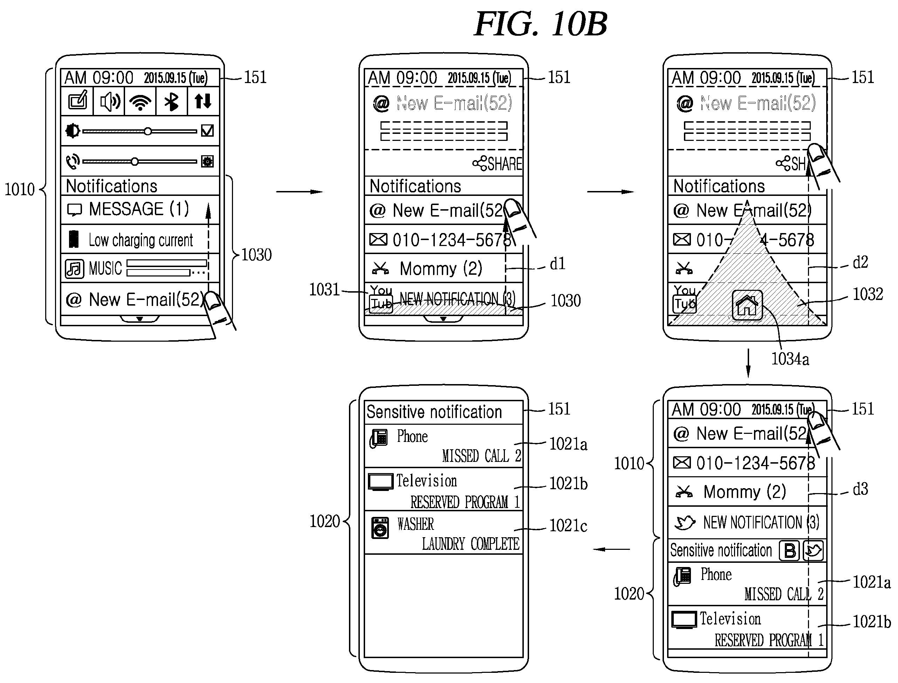

For another example, as illustrated in the first drawing of FIG. 10B, the first notification panel 1010 may include a specific region 1030 displayed with notification information. When a size of notification information (or a number of notification information) displayed in the specific region exceeds a size of the specific region 1030, the controller 180 may perform scroll based on a drag touch applied to the specific region 1030 as illustrated in the first and the second drawing of FIG. 10B.

When a drag touch is applied to the specific region in a direction (upward direction) opposite to the one direction (downward direction) in a state that notification information corresponding to the last order is displayed in the specific region 1030, the controller 180 may display a second notification panel displayed with the notification information of an external device on the touch screen 151.

Specifically, when a drag touch is applied to the opposite direction (upward direction) by a first distance (d1) in a state that notification information 1031 corresponding to the last order is displayed in the specific region 1030 as illustrated in the second drawing of FIG. 10B, the controller 180 may display a graphic image 1032 indicating that scroll due to the drag touch applied to the opposite direction is disabled in the specific region 1030 in the specific region 1030.

Then, when the drag touch (drag touch applied in an upward direction) is applied by a second distance (d2) larger than the first distance (d1) as illustrated in the third drawing of FIG. 10B, the controller 180 may display an icon 1034a associated with external devices on the graphic image 1032.

Then, when the drag touch (drag touch applied in an upward direction) is applied by a third distance (d3) larger than the second distance (d2) as illustrated in the fourth drawing of FIG. 10B, the controller 180 may display a second notification panel 1020 including the notification information 1021 a, 1021b of the external devices on the touch screen 151.

At this time, part of the second notification panel 1020 may be displayed on the touch screen 151.

Then, when a drag touch applied by a distance larger than the third distance is released, the controller 180 may display the second notification panel 1020 including (displayed with) the notification information 1021, 1021b of external devices on the touch screen 151 as illustrated in the fifth drawing of FIG. 10B.

On the other hand, the present disclosure may display a second notification panel indicating the notification information of external devices on the touch screen even when the entire first notification panel is not displayed.

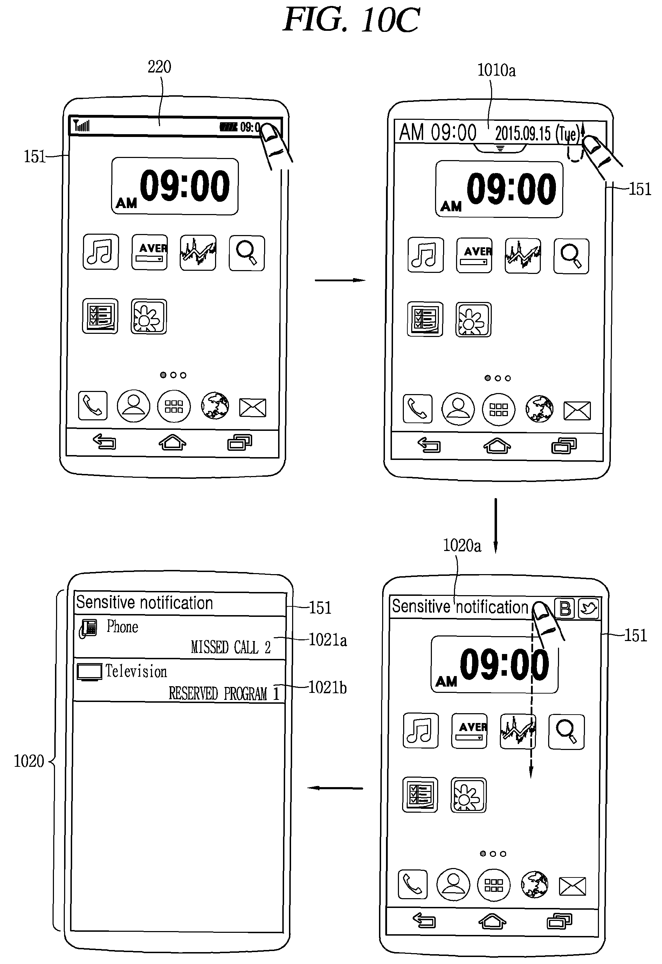

For example, when a touch is applied to one region 220 (for example, status display bar) of the touch screen 151 as illustrated in the first drawing of FIG. 10C, part 1010a of the first notification panel may be displayed in one region 220 of the touch screen 151.

The part 1010a of the first notification panel may be displayed while the touch is maintained on the touch screen 151.

When a touch having a predetermined pattern is consecutively applied to the touch in a state that part 1010a of the first notification panel is displayed (in a state that the touch is maintained) as illustrated in the second drawing of FIG. 10C, the part 1010a of the first notification panel may be changed to part of the second notification panel 1020a as illustrated in the third drawing of FIG. 10C.

The predetermined pattern may be a pattern of advancing in one direction and then returning in a direction opposite to the one direction as illustrated in the second drawing of FIG. 10C.

When a touch having a predetermined pattern is consecutively applied to the touch, the controller 180 may change the part 1010a of the first notification panel displayed in one region 220 of the touch screen 151 to part 1020a of the second notification panel capable of displaying the notification information of external devices.

Then, the controller 180 may display the second notification panel 1020 on the touch screen 151 as illustrated in the fourth drawing of FIG. 10C based on a drag touch consecutively applied to the touch having the predetermined pattern in one direction in a state that that the part 1020a of the second notification panel is displayed (a touch having the predetermined pattern is maintained) as illustrated in the third drawing of FIG. 10C.

The notification information 1021 a, 1021 b of external devices on which events have occurred may be displayed on the second notification panel 1020 as illustrated in the fourth drawing of FIG. 10C.

For another example, when a drag touch started from at least two points is applied to one region (for example, status display bar) of the touch screen 151, the controller 180 may display the second notification panel instead of the first notification panel on the touch screen 151.

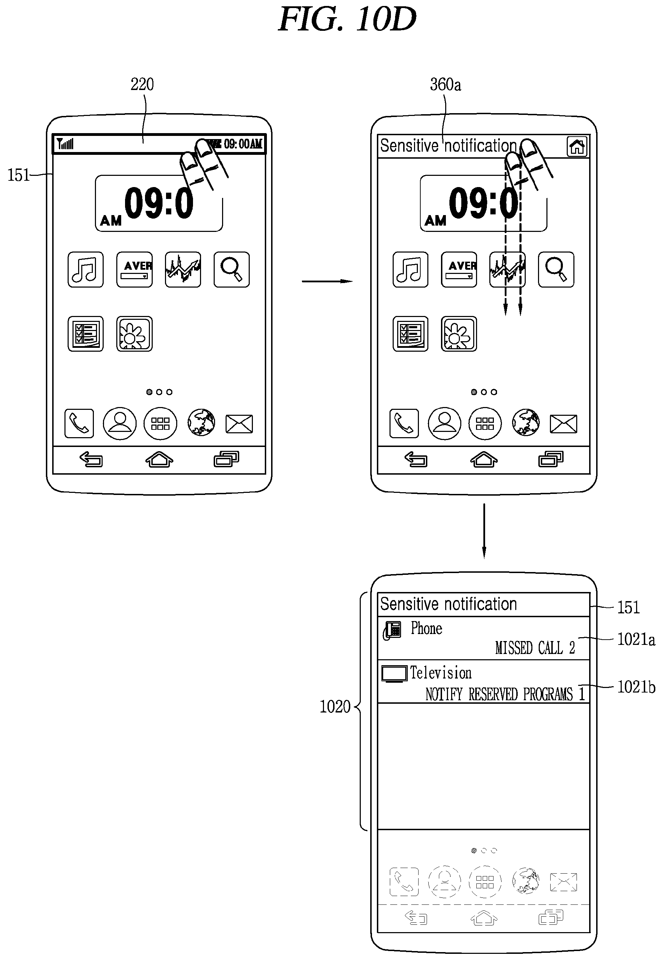

Referring to FIG. 10D, when a touch is applied to at least two points in one region 220 of the touch screen 151 as illustrated in the first drawing of FIG. 10D, the controller 180 may display the part 1020a of the second notification panel instead of the first notification panel (or part of the first notification panel) in the one region 330 as illustrated in the second drawing of FIG. 10D.

Then, when a drag touch (i.e., a drag touch started from at least two points) applied in one direction is consecutively applied to touches applied to the at least two points, the controller 180 may display the second notification panel 1020 displayed with the notification information 1021 a, 1021b of external devices on the touch screen 151 as illustrated in the second drawing of FIG. 10D.

Through the foregoing configuration, it may be possible to provide various user interfaces capable of display a second notification panel displayed with the notification information of external devices on which events have occurred on the touch screen.

In a mobile terminal according to the present disclosure, when a predetermined type of touch is applied to the touch screen based on the terminal body performing communication with an external communication device installed at a predetermined place, a control screen associated with the predetermined place may be displayed. Accordingly, the user may more conveniently enter the control screen associated with the predetermined place.

The control screen may include map images associated with the predetermined place and image objects corresponding to external devices disposed at the predetermined place. The map images and the image objects may provide a UI/UX capable of allowing the user to more intuitively use the control screen.

Furthermore, map images associated with the predetermined place may be map images for various regions at the predetermined place. Furthermore, map images for the various regions may be converted to each other. Accordingly, the user may efficiently use the control screen through various map images.

In addition, when a predetermined type of touch is applied to the image object, a control command for the image object may be formed. Accordingly, the user may more conveniently control external devices disposed at the predetermined place through the control screen.

The foregoing present invention may be implemented as codes readable by a computer on a medium written by the program. The computer-readable media may include all kinds of recording devices in which data readable by a computer system is stored. Examples of the computer-readable media may include ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

An aspect of the present disclosure is to provide a mobile terminal and a control method thereof capable of performing control associated with a predetermined place.

Another aspect of the present disclosure is to provide a mobile terminal and a control method thereof capable of performing control associated with a plurality of predetermined places.

Still another aspect of the present disclosure is to provide a mobile terminal and a control method thereof capable of performing control associated with a predetermined place at which a terminal body is currently located among a plurality of predetermined places.

In order to accomplish the foregoing tasks, a mobile terminal according to an embodiment may include a body; a wireless communication unit configured to perform communication with an external communication device; a touch screen formed to display a home screen and sense a touch; and a controller configured to control the touch screen to display a control screen for performing control on at least part of external devices at a place at which the body is located based on the external communication device connected through the wireless communication unit when a predetermined type of touch is applied to the touch screen while displaying the home screen.

According to an embodiment, the predetermined type of touch may be a multi-touch applied to at least two or more contact points on the touch screen.

According to an embodiment, the multi-touch may be a pinch-out touch for increasing a relative distance between two contact points on the touch screen.

According to an embodiment, a first control screen for controlling at least part of external devices disposed at a first place may be displayed on the touch screen when the body is located at the first place, and a second control screen for controlling at least part of external devices disposed at a second place may be displayed on the touch screen when the body is located at the second place different from the first place.

According to an embodiment, when the wireless communication unit is connected to the external communication device in a wireless manner, the controller may control the touch screen to display notification information indicating the wireless connection.

According to an embodiment, the control screen may include a map image for at least a partial region of the predetermined place.

Here, the map image may include a first map image for a first region of the predetermined place and a second map image for a second region of the predetermined place, and the first and the second region may be different regions or regions in which any one region contains another region. Furthermore, when a predetermined type of touch is applied to the touch screen in a state that any one map image of the first and the second map image is displayed thereon, the controller may control the touch screen to display another map image.

Furthermore, the map image may be a three-dimensional map image for a partial region of the predetermined place, and the three-dimensional map image may be a three-dimensional map image pre-stored in the body or an image received in real time from a camera provided in the body.

Here, the three-dimensional map image may be displayed on the touch screen to correspond to at least one of a current location of the body sensed within the predetermined place and a direction directed from the body.

Here, when a predetermined type of touch is applied to the three-dimensional map image, the controller may control the touch screen to display a plan view image for a partial region containing a current location of the body within the predetermined place.

Furthermore, the control screen may include at least one of an image object corresponding to an external device disposed at the predetermined place and overlapping with the map image and the status information of the external device.

Here, the status information of the external device may be displayed at a position overlapping with or adjacent to an image object corresponding to the external device.

Here, the controller may generate a control command for controlling the external device based on a predetermined type of touch applied to the image object.

According to an embodiment, when the image object is an image object corresponding to a TV set, the controller may receive image information being displayed on the TV set through the wireless communication unit, and display the image information through the touch screen based on a predetermined type of touch applied to the image object.

According to an embodiment, when a predetermined type of touch is applied to the control screen in a state that the control screen is displayed on the touch screen, the controller may control the touch screen to display the home screen, and the home screen comprises an icon linked to the control screen.

According to an embodiment, the icon linked to the control screen may include a plurality of icons corresponding to a plurality of regions at a predetermined place.

According to an embodiment, when an event occurs on an external device in a state that the home screen is displayed on the touch screen, the controller may display a notification icon for notifying the event at a position overlapping with or adjacent to an icon corresponding to a region in which the external device is disposed among the plurality of icons.

A control method of a mobile terminal according to an embodiment of the present disclosure may include performing communication with an external communication device installed at a predetermined place through a wireless communication unit; and controlling a touch screen to display a control screen for performing control associated with a predetermined place when a predetermined type of touch is applied to the touch screen subsequent to performing communication with the external communication device based on a body being located at the predetermined place.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a body;
a wireless communication unit configured to perform communication with an external communication device that is coupled to a plurality of external devices located at a predetermined space;
a touch screen configured to display a home screen and to sense a touch; and
a controller configured to control the touch screen to display a control screen to control one or more of the external devices at the predetermined place,
wherein the control screen is displayed when a predetermined type of touch is applied to the touch screen while displaying the home screen and the body of the mobile terminal is determined to be at the predetermined space based on the external communication device connected through the wireless communication unit.

2. The mobile terminal of claim 1, wherein the predetermined type of touch is a multi-touch applied to at least two or more contact points on the touch screen.

3. The mobile terminal of claim 2, wherein the multi-touch is a pinch-out touch for increasing a relative distance between two contact points on the touch screen.

4. The mobile terminal of claim 2, wherein the multi-touch maintains a predetermined number of two or more contact points on the touch screen for more than a predetermined period of time.

5. The mobile terminal of claim 1, wherein a first control screen to control at least one external device disposed at a first place is displayed on the touch screen when the body is located at the first place, and a second control screen to control at least one external device disposed at a second place is displayed on the touch screen when the body is located at the second place different from the first place.

6. The mobile terminal of claim 1, wherein when the wireless communication unit is connected to the external communication device in a wireless manner, the controller controls the touch screen to display notification information indicating the wireless connection.

7. The mobile terminal of claim 1, wherein the control screen comprises a map image for at least a partial region of the predetermined place.

8. The mobile terminal of claim 7, wherein the map image comprises a first map image for a first region of the predetermined place and a second map image for a second region of the predetermined place, and
the first region and the second region are different regions or regions in which one region includes another region.

9. The mobile terminal of claim 8, wherein when a predetermined type of touch is applied to the touch screen in a state in which the first map image or the second map image is displayed, the controller controls the touch screen to display another image.

10. The mobile terminal of claim 7, wherein a sensing unit that senses an angle of the body with respect to the ground is provided in the body, and
the controller controls the touch screen to display a first type of map image when the angle sensed by the sensing unit is above a predetermined angle, and controls the touch screen to display a second type of map image when the angle sensed by the sensing unit is below a predetermined angle.

11. The mobile terminal of claim 7, wherein the map image is a three-dimensional map image for a partial region of the predetermined place, and
the three-dimensional map image is a three-dimensional map image pre-stored in the body or an image received in real time from a camera provided in the body.

12. The mobile terminal of claim 11, wherein the three-dimensional map image is displayed on the touch screen to correspond to at least one of a current location of the body sensed within the predetermined place or a direction relative to the body.

13. The mobile terminal of claim 7, wherein the control screen comprises at least one of an image object corresponding to an external device disposed at the predetermined place and overlapping with the map image or status information of a corresponding external device.

14. The mobile terminal of claim 13, wherein the status information is displayed at a position overlapping with or adjacent to the image object of the corresponding external device.

15. The mobile terminal of claim 1, wherein when a predetermined type of touch is applied to the control screen in a state in which the control screen is displayed on the touch screen, the controller controls the touch screen to display the home screen, and the home screen comprises an icon linked to the control screen.
